(19) **Europäisches Patentamt / European Patent Office / Office européen des brevets**

(11) **EP 2 562 204 A1**

(12) # EUROPEAN PATENT APPLICATION
published in accordance with Art. 153(4) EPC

(43) Date of publication:
**27.02.2013 Bulletin 2013/09**

(21) Application number: **11772015.1**

(22) Date of filing: **19.04.2011**

(51) Int Cl.:
**C08J 3/14** [(2006.01)]   **G02B 5/30** [(2006.01)]
**G02F 1/1335** [(2006.01)]

(86) International application number:
**PCT/JP2011/059645**

(87) International publication number:
**WO 2011/132680 (27.10.2011 Gazette 2011/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2010   JP 2010096623**
**02.07.2010   JP 2010151606**
**18.08.2010   JP 2010182950**

(71) Applicant: **Ube Industries, Ltd.**
**Ube-shi**
**Yamaguchi 755-8633 (JP)**

(72) Inventors:
- **AONO, Hajime**
  **Ichihara-shi, Chiba 290-0045 (JP)**
- **NAKAYAMA, Kimio**
  **Ichihara-shi, Chiba 290-0045 (JP)**
- **TAKAHASHI, Junya**
  **Ichihara-shi, Chiba 290-0045 (JP)**
- **SAKIMOTO, Ryo**
  **Ichihara-shi, Chiba 290-0045 (JP)**
- **SHOJI, Tatsuya**
  **Ichihara-shi, Chiba 290-0045 (JP)**

(74) Representative: **Grünecker, Kinkeldey,**
**Stockmair & Schwanhäusser**
**Leopoldstrasse 4**
**80802 München (DE)**

(54) **POLYAMIDE MICROPARTICLES, MANUFACTURING METHOD THEREFOR, OPTICAL FILM USING SAID POLYAMIDE MICROPARTICLES, AND LIQUID-CRYSTAL DISPLAY DEVICE**

(57)     Disclosed are polyamide microparticles, a manufacturing method therefor, an optical film, and a liquid crystal display device using the polyamide microparticles, whereby polarized light can be efficiently converted to non-polarized light that is close to natural light, without accompanying a change in color, and light from a light source can be evenly diffused. The disclosed polyamide microparticles are characterized by including a spherocrystal structure and exhibiting a crystallite size of at least 12 nm, as measured by wide-angle X ray diffraction, and a crystallinity of at least 50%, as measured by DSC. The disclosed optical film is characterized by having a resin layer that contains the aforementioned polyamide microparticles. The disclosed liquid crystal display device is provided with a light-source device, a rear polarizer, liquid crystal cells, and a front polarizer, and is characterized by having the aforementioned optical film between the light-source device and either the front surface of the front polarizer or the rear surface of the rear polarizer.

FIG. 4

EP 2 562 204 A1

Printed by Jouve, 75001 PARIS (FR)

**Description**

Technical Field

The present invention relates to polyamide microparticles having an excellent depolarization ability, a manufacturing method therefor, and an optical film and a liquid crystal display device using them.

Background Art

In recent years, the liquid crystal display device is emerged as a display device having characteristics like thin shape, light weight, and high image quality, that can be used as a substitute of a CRT, and a multi color or high definition liquid crystal display device is commercially available. As a principle for driving those liquid crystal display devices, there are TFT mode, MIM mode, STN mode, and TN mode or the like. For any mode, one set of polarizers is used to emit display light as linearly polarized light. Thus, the light reaching an observer is linearly polarized light.

Meanwhile, as a method for reducing eyestrain caused by use of a liquid crystal display device like PC for a long period of time, a polarizer filter or polarizer glasses is sometimes used. However, since the light emitted from a liquid crystal screen is linearly polarized light, when angle of a polarizer filter or polarizer glasses is tilted, light amount is significantly reduced so that, in severe cases, it may not be seen or is seen with different modes between left and right, and therefore very inconvenient.

To avoid such problems, a method of converting linearly polarized light to elliptically polarized light by using a 1/4 wavelength retardation plate compared to the wavelength or a method of utilizing a fog film phenomenon which causes both the interference and diffraction of wavelength of incident light is contemplated. However, both have rather minor effects.

Further, converting linearly polarized light to non-polarized light by using a polymer having an amorphous structure (see Patent Literature 1), a plate for depolarization by using a commercially available PET film or a quartz plate having birefringence (see Patent Literature 2), or an optical laminate having a depolarization ability in which a transparent resin layer containing birefringent microparticles, which are made of extremely short fibers (see Patent Literature 3), are suggested. However, none of them is found to be practically useful.

In this connection, a light filter containing microparticles including a crystalline polymer having a spherulite structure, that are obtained by mixing a solution containing polyamide and its solvents therefor, non-solvents for polyamide, and water to give a temporarily homogeneous solution and precipitating the polymer to give particles, is suggested (see Patent Literature 4).

Further, as a method for manufacturing the polyamide microparticles, a method of manufacturing polyamide particles by mixing a solution containing polyamide and its solvents therefor, non-solvents for polyamide, and water to give a temporarily homogeneous solution and precipitating the polymer, is disclosed in Patent Literature 5. In Patent Literatures 6 to 8, a method of temperature-induced phase separation including dissolving polyamide as a crystalline polymer in a high temperature solvent like ethylene glycol and cooling the solution to obtain microparticles of the polyamide is disclosed.

Further, although a liquid crystal display device using an oriented polymer film having spherulite structures is suggested (see Patent Literature 9), it is provided between a polarizer plate and a liquid crystal layer under the purpose of broadening viewing angle, and therefore, in terms of purpose, it is different from the film of the invention for depolarization. Further, when a polymer film having spherulite structures is used as a film for depolarization to convert linearly polarized light to non-polarized light, strain applied during film manufacturing remains on the film after molding to exhibit anisotropy of refractive index so that a film for depolarization which can uniformly convert linearly polarized light to non-polarized light identical to natural light cannot be given.

For each member constituting a back light of a liquid crystal display device, recently the studies are made to improve light utilization efficiency by inhibiting light loss, for example adopting materials with high transmittance. However, since the polarizing film introduced to a liquid crystal element generally consists of an iodine-based or a dichroic pigment, 50% of natural light is transmitted but remaining 50% light is absorbed. As a result, having low light utilization efficiency, it has a problem of having dark screen.

For such reasons, various methods have been suggested to improve light utilization efficiency by separating off polarized light components included in natural light, transmitting only the light in one direction while reflecting the light in the other direction, and using again the reflected light.

Disclosed in Patent Literature 10 is a reflective polarizer display in which stretched films having different refractive index are overlaid to have a multilayer. According to the display, light from the back light passes through a prism sheet and enters a brightness enhancement film. The brightness enhancement film consists of a bottom diffuser film and a reflective polarizer layer (DBEF layer) and a upper diffuser film layer. In the reflective polarizer layer, the first polarization orientation component of the incident light is transmitted while the second polarization orientation component which is at a right angle with respect to the first component is reflected with high efficiency. It is also described that the reflected second polarization component is uniformly randomized in an optical cavity into the first component and second component according to light scattering and reflection, and after passing through again the reflective polarizer, the light can be used again and the brightness of a liquid crystal display can be improved accordingly. A liquid crystal display device which also recycles polarization components that are reflected based on the same technical idea is disclosed in Patent Literatures 11 to 13.

However, randomization of the second polarization component only by light scattering or reflection is difficult to achieve and it is necessary to repeat several times the scattering and reflection, and therefore inefficient. Further, although it is possible to obtain uniformly the first component and second component with high efficiency by performing circular polarization using a λ/4 wavelength retardation plate, as the λ/4 wavelength retardation plate has wavelength dependency in visible light range, a color shift problem due to a transmitting property for light with specific wavelength occurs. To avoid such problems, using a broad range λ/4 wavelength retardation plate may be considered. However, being currently expensive, it is not practically usable.

In Patent Literature 4, a filter having a function of depolarization by using porous polyamide microparticles is disclosed. According to the literature, it is described that the light diffusing property can be also obtained by controlling the difference in refractive index between polyamide particles and binder resins.

Citation List

Patent Literatures

Patent Literature 1: Japanese Patent Application Laid-Open (JP-A) No. 2003-185821
Patent Literature 2: JP-A No. 10-10522
Patent Literature 3: JP-A No. 2010-091655
Patent Literature 4: International Publication No. 2007/119592
Patent Literature 5: JP-A No. 2007-204767
Patent Literature 6: JP-A No. 8-12765
Patent Literature 7: U.S. Patent No. 2,639,278
Patent Literature 8: JP-A No. 2006-328173
Patent Literature 9: JP-A No. 6-308496
Patent Literature 10: JP-A No. 2004-004699
Patent Literature 11: JP-A No. 2000-221507
Patent Literature 12: JP-A No. 2001-188126
Patent Literature 13: JP-A No. 04-184429

Summary of Invention

Technical Problem

According to the conventional technologies described above, although the light filter disclosed in Patent Literature 4 shows a depolarization ability of converting linearly polarized light to non-polarized light which is close to natural light, transmittance of light through polarizers that are aligned by cross Nichol configuration, in which the film is disposed between the polarizers, is 10% or less at wavelength of 550 nm, thus the conversion efficiency is not satisfactory from the practical point of view.

Under the circumstances, object of the invention is to provide polyamide microparticles, a manufacturing method therefor, an optical film using the polyamide microparticles, and a liquid crystal display device, in which the microparticles have an effect that polarized light can be efficiently converted to non-polarized light that is close to natural light, without accompanying a change in color, and light from a light source can be evenly diffused.

Solution to Problem

To achieve the purpose of the invention as described above, inventors of the invention carried out intensive studies, and as a result found that, by using polyamide microparticles having a spherulite structure and a controlled crystallite size and crystallinity, an optical film and a liquid crystal display device having an effect that polarized light can be efficiently converted to non-polarized light that is close to natural light, without accompanying a change in color, and light from a light source can be evenly diffused can be obtained, and thus completed the invention. Namely, the invention relates to Polyamide microparticles including a spherulite structure and exhibiting a crystallite size of 12 nm or more, as measured by wide-angle X ray diffraction, and a crystallinity of 50% or more, as measured by DSC.

Further, the invention relates to an optical film including resin layers having the polyamide microparticles.

Further, the invention relates to a liquid crystal display device including a light-source device, a rear polarizer, liquid crystal cells, and a front polarizer, which has the optical film between the light-source device and either the front surface of the front polarizer or the rear surface of the rear polarizer.

Further, the invention relates to a method of manufacturing polyamide microparticles including mixing the polyamide (A) and the solvent (B), which acts as a good solvent for the polyamide (A) at high temperatures but as a non-solvent at low temperatures, heating the mixture to give a homogeneous polyamide solution, mixing the polyamide solution with the solvent (C) at low temperatures under stirring for 3 min or less until the temperature is 20 to 80°C lower than the phase separation temperature of the polyamide solution, and keeping the mixture at the same temperature to precipitate the polyamide.

Advantageous Effects of Invention

As described above, provided by the invention is polyamide microparticles which have an effect that polarized light can be efficiently converted to non-polarized light that is close to natural light, without accompanying a change in color, and light from a light source can be evenly diffused, a manufacturing method therefor, an optical film, and a liquid crystal display device using the polyamide microparticle.

Brief Description of Drawings

Fig. 1 is an exploded view illustrating the construction of the liquid crystal display device (back light part) of the invention. (a) There is no reflective polarizer layer (DBEF). (b) There is a reflective polarizer layer (DBEF). (c) There is a reflective polarizer layer (wire grid type).
Fig. 2 is an exploded view illustrating the construction of the liquid crystal display device (upper part of the liquid crystal cell) of the invention. (a) A is an antireflection layer. (b) A is installed between an antireflection layer and a polarizer. (c) A is installed inside the polarizer.
Fig. 3 is a schematic drawing illustrating the device for measuring strength of the light transmitted through a film.
Fig. 4 is an electron microscopic image of the polyamide microparticles that are obtained from Example 1.
Fig. 5 shows the result of evaluating a depolarization ability of the optical films that are manufactured in Examples 1 and 3, and Comparative Examples 1 and 3.
Fig. 6 is an electron microscopic image of the polyamide microparticles that are obtained from Comparative Example 1.
Fig. 7 is an electron microscopic image of the polyamide microparticles that are obtained from Example 3.
Fig. 8 is a scanning electron microscopic image of the polyamide microparticles that are used in Example 10.
Fig. 9 is a scanning electron microscopic image of the polyamide microparticles that are used in Comparative Example 6.
Fig. 10 shows wavelength dependency of light transmittance of the optical films that are manufactured in Example 11 and Comparative Example 7, respectively, and a 1/4 wavelength retardation plate (Comparative Example 8).
Fig. 11 shows the result of measuring strength of light transmitted through the optical films of Example 14 and Comparative Example 11.

Description of Embodiments

The invention relates to polyamide microparticles which have a crystal structure specific to a crystalline resin like polyamide, that is a spherical or semi-spherical spherulite structure, a spherulite structure which has an expansion on partially lacked one side and a lack part on the other side (that is, C shape, curved bead shape), or a spherulite structure which is close to more a lacked axialite (that is, dumbbell shape), in which the microparticles also have high crystallinity including certain crystallite size and crystallinity. The polyamide microparticles related to the invention preferably have a porous structure and relatively evenly ranged particle diameter and particle shape, and they have better depolarization ability than conventional polyamide microparticles. For such reasons, the microparticles may be used as a material of a high-performance light diffuser for depolarization, which is used for an optical filter or a back light of a liquid crystal display.

According to the polyamide microparticles related to the invention, the spherulite structure can be determined by observing cross section of particles with a scanning or transmission type electron microscope and examining any radial growth of polyamide fibrils starting near the center nucleus. Further, the polyamide microparticles related to the invention have, as a single particle itself, either locally or wholly a spherulite structure specific to a crystalline polymer which is a spherical or semi-spherical crystal structure, a partially lacked spherulite structure (that is, C shape, curved bead shape), or a more lacked axialite -like spherulite structure (that is, dumbbell shape) Higher ability of depolarization can be obtained by having the spherulite structure described above, and therefore desirable. Further, the microparticles may be a mixture of particles having those various structures. The expression "... have, as a single particle itself, either locally or wholly a spherulite structure..." means a structure specific to a crystalline polymer that is formed by three-dimensional growth of a polyamide fibril in either single direction or radial direction, starting from a single or multiple nucleus near the center of single particle. The term "locally" means that the particle contains part of the structure.

The polyamide microparticles related to the invention has a crystallinity of 50% or more, as measured by DSC. Crystallinity of polyamide can be measured by a method based on X ray diffraction, a method based on DSC, or a method based on density. A method based on DSC measurement is preferable. In general, crystallinity of polyamide crystallized from a molten polymer is about 30% at most. When the crystallinity is low, an ability of converting linearly polarized light to non-polarized light is poor, and therefore undesirable.

The polyamide microparticles related to the invention has a crystallite size of at 12 nm (nanometer) or more, as measured by wide angle X ray diffraction. The higher the crystallite size, the better the depolarization ability is. Meanwhile, if it is less than 12 nm, there is a tendency that the depolarization ability is lowered.

Spherical equivalent number average particle diameter of the polyamide microparticles related to the invention (herein below, it may be also simply referred to as "number average particle diameter") is preferably from 1.0 to 50 $\mu$m, and more preferably 1.0 to 30 $\mu$m. When the number average particle diameter is less than 1.0 $\mu$m, secondary aggregation force becomes strong so that handleability is impaired. On the other hand, when it is more than 50 $\mu$m, film thickness of an optical material containing particles is increased at the time of handling them as optical particles for use as electronic materials, making it difficult to obtain a thin film, and therefore undesirable.

The polyamide microparticles related to the invention preferably have porous structures. By having porous structures, there is a tendency that the multiple scattering effect is enhanced and the depolarization ability is increased.

The polyamide microparticles related to the invention preferably have BET specific surface area of 0.1 to 80 $m^2/g$, more preferably 3 to 75 $m^2/g$, and still more preferably 5 to 70 $m^2/g$. When the specific surface area is smaller than 0.1 $m^2/g$, the porous property of a porous power obtained is impaired. On the other hand, when it is bigger than 80 $m^2/g$, the particles may easily get aggregated.

Average pore diameter of the polyamide microparticles related to the invention is preferably 0.01 to 0.5 $\mu$m, and more preferably 0.01 to 0.3 $\mu$m. When the average pore diameter is smaller than 0.01 $\mu$m, the porous property is impaired. On the other hand, when it is larger than 0.5 $\mu$m, mechanical strength of the particles may be poor.

Porous index (i.e. roughness index, RI) of the polyamide microparticles related to the invention is preferably 5 to 100. As described herein, the porous index (RI) is defined as the ratio of specific surface area of a spherical porous particle to specific surface area of a smooth particle having the same diameter. When porous index is smaller than 5, a supporting activity or an absorbing activity as a porous particle is poor, and therefore undesirable. On the other hand, when the porosity index is bigger than 100, handleability as powder is lowered.

Melting point of the polyamide microparticles related to the invention is preferably 110 to 320°C, and more preferably 130 to 300°C. When the melting point is lower than 110°C, thermal stability for an optical application tends to be lowered.

Regarding particle diameter distribution, ratio of the volume average particle diameter (or volume based average particle diameter) to the number average particle diameter (or number based average particle diameter) of the polyamide microparticles related to the invention is preferably from 1 to 2.5, more preferably from 1 to 2.0, and still more preferably from 1 to 1.5. When the ratio of the volume average particle diameter to the number average particle diameter (that is, particle diameter distribution index, PDI) is larger than 2.5, handleability as powder is lowered.

The polyamide microparticles related to the invention have depolarization coefficient Dpc ($\lambda$) for the light with wavelength of 550 nm, in which the depolarization coefficient is defined by the following mathematical formula 1 and mathematical formula 2, of preferably 1.5/m or more, more preferably 2.0/m or more, and still more preferably 2.3/m or more. When the depolarization coefficient is less than 1.5/m, there is a need to add a large amount of particles to an optical film, and also problems may arise like film thickness is increased or haze is increased, and therefore undesirable.

[Mathematical formula 1]

$$Dpc(\lambda) = \frac{Dp(\lambda)}{\phi_p \cdot t} \qquad (\ /m)$$

(where, $\phi_p$ represents volume fraction of polyamide microparticles in a resin sheet containing evenly dispersed polyamide microparticles and t represents thickness (m) of the resin sheet).

[Mathematical formula 2]

$$Dp(\lambda) = \frac{v(\lambda) \cdot T_s(\lambda)/(T_1(\lambda) \cdot T_2(\lambda) \cdot T_p(\lambda)) - 1}{v(\lambda) - 1}$$

(where, $v(\lambda)$ represents extinction ratio of a polarizing film, $T_1(\lambda)$ represents light transmittance of a polarizing film, $T_2(\lambda)$ represents maximum light transmittance when linearly polarized light is incident on a polarizing film, $T_p(\lambda)$ represents light transmittance of a resin sheet which does not contain polyamide microparticles, and $T_s(\lambda)$ represents light transmittance when a resin sheet containing evenly dispersed polyamide microparticles is inserted between two polarizing films in cross Nichol configuration).

Examples of the polyamide used for the polyamide microparticles related to the invention include those obtained by ring opening polymerization of cyclic amide, polycondensation of amino acid, or polycondensation of dicarboxylic acid and diamine. Examples of the materials that are used for ring opening polymerization of cyclic amide include ε-caprolactam and ω-laurolactam. Examples of the materials that are used for polycondensation of amino acid include ε-aminocaproic acid, ω-aminododecanoic acid, and ω-aminoundecanoic acid. Examples of the materials that are used for polycondensation of dicarboxylic acid and diamine include dicarboxylic acid like oxalic acid, adipic acid, sebacic acid, and 1,4-cyclohexyl dicarboxylic acid, and their derivatives, and diamine like ethylene diamine, hexamethylene diamine, 1,4-cyclohexyl diamine, pentamethylene diamine, and decamethylene diamine.

Those polyamides may be further copolymerized with a small amount of an aromatic component like terephthalic acid, isophthalic acid, and m-xylylene diamine.

Specific examples of the polyamide include polyamide 6, polyamide 46, polyamide 66, polyamide 610, polyamide 612, polyamide 11, polyamide 12, polyamide 6/66, polynonamethylene terephthalamide (polyamide 9T), polyhexamethylene adipamide/polyhexamethylene terephthalamide copolymer (polyamide 66/6T), polyhexamethylene terephthalamide/polycaproamide copolymer (polyamide 6T/6), polyhexamethylene adipamide/polyhexamethylene isophthalamide copolymer (polyamide 66/6I), polyhexamethylene isophthalamide/polycaproamide copolymer (polyamide 6I/6), polydodecamide/polyhexamethylene terephthalamide copolymer (polyamide 12/6T), polyhexamethylene adipamide/polyhexamethylene terephthalamide/polyhexamethylene isophthalamide copolymer (polyamide 66/6T/6I), polyhexamethylene terephthalamide/polyhexamethylene isophthalamide copolymer (polyamide 6T/6I), polyhexamethylene terephthalamide/poly(2-methylpentamethylene terephthalamide) copolymer (polyamide 6T/M5T), polyxylene adipamide (polyamide MXD6), and a mixture and a copolymerization resin thereof. Among them, polyamide 6, polyamide 46, polyamide 66, polyamide 610, polyamide 612, polyamide 11, polyamide 12, or polyamide 6/66 copolymerization resin is preferable. From the view point of handleability of materials, polyamide 6 is particularly preferable.

Molecular weight of the polyamide is preferably 1,000 to 100,000, more preferably 2,000 to 50,000, and still more preferably 3,000 to 30,000. When the molecular weight of the polyamide is excessively small, condition for obtaining porous microparticles is limited, and thus they cannot be easily produced. On the other hand, when the molecular weight of the polyamide is excessively high, primary aggregates may be easily generated during manufacture, and therefore undesirable.

The polyamide microparticles related to the invention are produced by a method based on temperature induced phase separation. For example, the polyamide (A) used as a raw material is mixed with the solvent (B), and by increasing the temperature, a homogeneous polyamide solution is produced. Further, with rapid cooling of the entire polyamide solution to a pre-determined temperature, the solvent (C) at low temperature is added thereto within a predetermined time under stirring and maintained for a while to give the microparticles. In this regard, the most important thing is mixing and stirring two liquids for as short a time as possible, making the mixture uniform before precipitation (white cloudiness) occurs, and having the precipitation progressed under static condition after stopping the stirring.

Herein below, a method for manufacturing resin microparticles to give the polyamide microparticles related to the invention is described.

The method for manufacturing resin microparticles includes mixing the crystalline resin (A) represented by the polyamide and the solvent (B), which acts as a good solvent for the resin at high temperatures but as a non-solvent at low temperatures and heating the mixture to give a homogeneous crystalline resin solution, mixing the resin solution with the solvent (C) at low temperatures within a pre-determined time under stirring, cooling the entire resin solution evenly and quickly to a pre-determined temperature, and keeping the mixture while maintaining it at the same temperature to have the resin precipitated. According to the particles obtained by this method, as a post-treatment described below, a process of performing an annealing for an appropriate time under reduced pressure like 100 Torr or less at the temperature, which is higher than the glass transition temperature but lower than the melting point, is not required. However, when it is carried out, further enhancement in performance may be expected.

Unlike the conventional phase separation based on addition of a solvent or phase separation based on cooling the temperature at constant rate, the manufacturing method described above involves addition of a non-solvent at low temperature to a solution of a crystalline resin at high temperature, stirring and mixing for obtaining an even state. As such, temperature inside the system becomes even in very short period of time. As a result, since the precipitation from a homogeneous solution of a crystalline resin at reduced temperature progresses after the temperature of a solution in super-saturated state is even in the system, nucleus formation and nucleus growth occur everywhere in the system at almost the same time. In this regard, by controlling rate of the nucleus formation and nucleus growth via temperature of a mixture solution and concentration of a crystalline resin, particles having a crystal structure specific to a crystalline resin which is a spherical or semi-spherical spherulite structure, a spherulite structure with a partially lacked structure (that is, C shape, curved bead shape), or a spherulite structure which is close to a more lacked axialite (that is, dumbbell shape), and also high crystallinity with specific crystallite size and crystallinity, are obtained.

For the crystalline resin other than polyamide, microparticles having high crystallinity can be also obtained by the manufacturing method described above. The crystalline resin (A) that may be used is not specifically limited if it can have a spherulite structure by crystallization from a molten state, and examples thereof include polyalkylene, polyamide, polyether, polyimide, and a liquid crystalline polymer. Specific examples thereof include polyolefins like polyethylene, isotactic polypropylene, syndiotactic polypropylene, polybutene-1, and polytetramethylpentene, crystalline ethylene · propylene copolymer, polyesters like polybutylene terephthalate and polyethylene terephthalate, syndiotactic polystyrene, isotactic polystyrene, polyphenylene sulfide, polyether ether ketone, wholly-aromatic polyamide, wholly-aromatic polyester, a fluororesin like polytetrafluoroethylene and polyvinylidene fluoride, an aliphatic polyester like polyethylene succinate, and polybutylene succinate, polylactic acid, polyvinyl alcohol, polyacetal, and polyether nitrile.

It is preferable that the solvent (B) used for the aforementioned manufacturing method functions as a non-solvent for the crystalline resin (A) at low temperatures, but as a good solvent at high temperatures, for example, in the temperature range below the boiling point of the solvent.

When the crystalline resin (A) is polyamide, examples of the solvent (B) which functions as a good solvent at high temperatures, but as a non-solvent for the polyamide at low temperatures include polyhydric alcohol and cyclic amide. Specific examples of the polyhydric alcohol include ethylene glycol, 1,2-propane diol, 1,3-propane diol, 1, 3-butane diol, 2, 3-butane diol, 1,4-butane diol, glycerin, propylene glycol, dipropylene glycol, 1,5-pentane diol, and hexylene glycol. It may be used as a mixture of them. Examples of the cyclic amide include those having 4 to 18 ring-constituting carbon atoms. Specific examples thereof include 2-pyrrolidone, piperidone, N-methyl pyrrolidone, ε-caprolactam, N-methyl caprolactam, and ω-lauryl lactam. Further, the cycloalkylidene ring may have a substituent group which does not inhibit the reaction. Examples of the substituent group include a cyclic or a non-cyclic alkyl group like a methyl group, an ethyl group, and a cyclohexyl group, a cyclic or a non-cyclic alkenyl group like a vinyl group and a cyclohexenyl group, an aryl group like a phenyl group, an alkoxy group like a methoxy group, an alkoxycarbonyl group like a methoxycarbonyl group, and a halogen group like a chloro group. Preferred examples include a non-substituted 2-pyrrolidone and ε-caprolactam.

To promote dissolution of the crystalline resin (A) in the aforementioned solvent, an additive for lowering dissolution temperature may be added. When the crystalline resin (A) is polyamide, for example, examples of an inorganic salt additive include calcium chloride and lithium chloride. However, as long as it is an inorganic salt which can promote dissolution according to an action of metal ions on hydrogen bonding part of the polyamide, it is not limited to them.

The heating temperature for dissolving the crystalline resin (A) is preferably 10 to 100°C higher than the temperature at which the resin starts to melt in the solvent (B) (herein below, it may be also referred to as "phase separation temperature"). Further, when dissolution is carried out while inside of the system is sealed with inert gas like nitrogen gas, the resin is less deteriorated, and therefore desirable.

Concentration of the crystalline resin (A) in the resin solution is preferably 0.1 to 30% by weight. When it is less than 0.1% by weight, productivity of the particles is lowered. On the other hand, when it is higher than 30% by weight, part of the resins that are not dissolved in a solution may be present, yielding uneven particles, and therefore undesirable.

According to the manufacturing method, by mixing a homogeneous resin solution with the solvent (C) at low temperature, which acts as a non-solvent for the crystalline resin (A) at least at the low temperatures, the entire resin solution is evenly and also rapidly cooled to a pre-determined temperature. As for the solvent (C) that can be used, any solvent which acts as a non-solvent for the crystalline resin (A) at least at the low temperatures and has high co-solubility with the solvent (B) can be used. A solvent consisting of the same components as the solvent (B) or a mixture with the same composition is preferable. In case of a solvent with different components or different composition, fractional recovery or the like may be difficult to carry out at the time of recycling the solvent after recovering the particles.

Examples of the solvent (C) that can be used in the invention include, when the crystalline resin (A) is polyamide, polyhydric alcohol and its mixture as described for the solvent (B). Specific examples thereof include ethylene glycol, 1,2-propane diol, 1,3-propane diol, 1,3-butane diol, 2,3-butane diol, 1,4-butane diol, glycerin, propylene glycol, dipropylene glycol, 1,5-pentane diol, and hexylene glycol. It may be used as a mixture of them.

Temperature for cooling the resin solution is preferably 20 to 80°C, more preferably 30 to 70°C, and still more preferably 40 to 60°C lower than the phase separation temperature. When the cooling temperature is less than 20°C lower than the phase separation temperature, degree of super-saturation is low, and thus a huge time is required from the start to the end of resin precipitation and precipitates in lump state or aggregates of particles are obtained, and therefore undesirable. On the other hand, when it is more than 80°C lower than the phase separation temperature, resin starts to precipitate due to local temperature decrease before uniform mixing of two liquids, yielding uneven particles or aggregates, and therefore undesirable.

Temperature and addition amount of the solvent (C) used for cooling are determined based on the temperature and volume of a resin solution to be cooled. The temperature difference between the resin solution and the solvent (C) used for cooling is preferably the same or less than 150°C. When the temperature difference is more than 150°C, the resin starts to precipitate while the solvent (C) is still being added, yielding aggregation or the like, and therefore undesirable. Further, the final resin concentration after mixing two liquids is preferably 20% by weight or less. More preferably, it is 15% by weight or less. When the resin concentration is too high at the time of precipitation, particles may aggregate, or in a worst case, the solution may solidify, and therefore undesirable.

Regarding the mixing of the resin solution at high temperature with the solvent (C) at low temperature, the solvent (C) at low temperature may be added to a resin solution at high temperature or a resin solution at high temperature may be added to the solvent (C) at low temperature. However, it is preferable that stirring is carried out until two liquids are evenly mixed. The stirring time is 3 min or less, preferably 2 min or less, and most preferably 1 min or less. Satisfactory mixing of the two liquids can be confirmed when concentration instability caused by difference in refractive index between two liquids is not seen or temperature of the mixture is constant, that is, the temperature varies within the range of ± 1°C.

With respect to stirring, it is not particularly limited in terms of shape or apparatus if it is a stirring wing generally used. Further, rotation number of a stirring wing is also not particularly limited if it can homogenize the mixing solution within a short time. Further, having a device for enhancing stirring effect like a baffle plate is desirable in that homogeneous mixing can be achieved within a short time.

Once the two liquids become homogeneous, it is preferable to stop the stirring and keep them still. When stirring is continued even after the resin starts to precipitate, shape of the resulting particles is disrupted to incomplete shape or aggregation occurs to broaden particle size distribution, and therefore undesirable. By having a baffle plate, flow of a liquid after terminating the stirring stops within a short time, and therefore desirable. It is preferable that the keeping time is maintained until the precipitation stops. Specifically, 5 min to 240 min is preferable, and 10 min to 120 min is more preferable.

After cooling to a pre-determined temperature, the polyamide is precipitated while being maintained at the same temperature. When the temperature of the cooled polyamide solution is changed, precipitates in lump state or aggregates of particles may be formed or the particle size distribution may be broadened, and therefore undesirable.

Further, particles can be obtained by stirring with spraying two liquids from a bi-fluid nozzle and keeping the sprayed liquid in a container at constant temperature. Further, it is also possible that the sprayed solution is precipitated under laminar flow within a pipe maintained at a pre-determined temperature.

The produced resin particles are subjected to solid-liquid separation by a method like decantation, filtration, and centrifugation to remove the solvents (B) and (C) adhered to surface. Thus, washing can be carried out by using a non-solvent for the resin at near room temperatures, which has low viscosity and high affinity for the solvents (B) and (C). When the crystalline resin (A) is polyamide particles, for example, monohydric aliphatic alcohol having 1 to 3 carbon atoms like methanol, ethanol, 1-propanol, and 2-propanol, aliphatic ketone like acetone and methyl ethyl ketone, aromatic ketone like acetophenone, propiophenone, and butyrophenone, aromatic hydrocarbon like toluene and xylene, aliphatic hydrocarbon like heptane, hexane, octane, and n-decane, and water can be mentioned as a solvent therefor.

The resin microparticles obtained after separation and washing may be prepared as dry powder after undergoing drying as a last step. As for the method for drying, a commonly used method for drying powder, for example, vacuum drying, constant temperature drying, spray drying, freeze drying, and fluid bath drying can be used. The polyamide microparticles related to the invention, that are produced according to the manufacturing method described above, do not require the post-treatment described below. However, by performing the post-treatment, further enhancement in performance is expected, and thus the post-treatment including annealing under reduced pressure like 100 Torr or less at the temperature which is higher than the glass transition temperature but lower than melting point can be carried out for an appropriate time during the drying step.

The polyamide microparticles related to the invention may be also manufactured by, in addition to the method described above, performing a post-treatment for increasing crystallite size or crystallinity of microparticles that are produced by a method known in the field like a method of obtaining particles by polymerizing a monomer of the polyamide in a non-solvent, a method of obtaining particles by adding a non-solvent to a polyamide solution, a method of spraying and drying a polyamide solution with a spray dryer, or a method of cooling the solution itself after it is obtained by dissolving the polyamide at high temperatures.

As for the post-treatment method for increasing crystallite size or crystallinity of the microparticles that are produced according to the method known in the field, a method of performing for an appropriate time the annealing under reduced pressure like 100 Torr or less at the temperature which is higher than the glass transition temperature but lower than melting point of the polyamide as a subject can be mentioned. At the annealing temperature lower than the glass transition temperature, mobility of the polyamide molecular chain is not sufficient, and therefore undesirable. On the other hand, at the annealing temperature higher than the melting point, the polyamide in particles may be melted, and therefore undesirable. Further, if the pressure is not under pressure like 100 Torr or less, the polyamide is degraded by oxidation, yielding decomposition and yellowing or the like, and therefore undesirable. The annealing time varies depending on annealing temperature or the like. However, it is generally within the range of 1 hour to 100 hours.

Next, the optical film related to the invention is described.

The optical film related to the invention contains the polyamide microparticles that are manufactured as above. Representative embodiments of the optical film include (a) particles are dispersed in a transparent resin by using the transparent resin as a binder resin and molded into a plate or a film shape, (b) particles are formed as a coating film, together with a binder resin, on a substrate, (c) particles are adhered on a substrate by having a binder resin as adhesives, and (d) an adhesive layer including a binder resin and particles is disposed between the top and bottom plates. Among them, an optical film in which a resin layer containing the particles are formed on a transparent substrate, like (b) and (c) above, is preferable.

With regard to the (a) above, examples of the transparent resin for dispersing particles include a methacryl resin, a polystyrene resin, a polycarbonate resin, a polyester resin, and a polyolefin resin including cyclic form. For enhancing light diffusing property, the transparent resin is preferably made of a material with different refractive index compared to (porous) particles. For inhibiting light scattering, the transparent resin is preferably made of a same kind of material as the (porous) particles or a material having similar refractive index to the (porous) particles. Further, for controlling the light diffusing property by utilizing the unevenness of a surface, it is also possible to apply overcoat of a binder resin only. The mixing ratio for the particles is preferably from 0.1 to 60% by weight compared to the total of the transparent resin and particles.

When a coating film containing the particles is formed on a transparent substrate according to the above (b), a method including mixing and dispersing the particles in a transparent resin (that is, transparent paint), coating the mixture on surface of a transparent substrate by a means like spraying method, dipping method, curtain flow method, roll coating method, and printing method, and curing it by UV irradiation or heating is used. Examples of the binder used for a transparent paint include an acrylate resin, a polyester resin, and a urethane resin.

As for the transparent substrate, not only the transparent resin plate like a methacrylate resin, a polystyrene resin, a polycarbonate resin, a polyester resin, a polyolefin resin including cyclic form, and cellulose based thermoplastic resin but also the inorganic transparent plate like a glass plate can be used. Among them, even a polyethylene terephthalate or polycarbonate substrate having high birefringence can be used without a specific problem.

For forming an optical film, the particles may be directly adhered on a transparent resin by using a binder resin (for example, known adhesives) as described in (c) above.

According to the optical film related to the invention, coefficient of variation CV $(\theta)$ of the degree of depolarization DODP $(\lambda, \theta)$ within the wavelength range of 400 to 750 nm, which is represented by the following mathematical formula 3, is 25% or less when $\theta = 0°$ to 90°. More preferably, it is 20% or less. Still more preferably, it is 15% or less. If the coefficient of variation CV $(\theta)$ is greater than 25%, change in color is increased when a polarizer is attached to a liquid crystal display and rotated, and therefore undesirable. As used herein, the term "$\theta$" indicates an angle between polarization axes of two polarizers. When the polarization axes are parallel to each other, $\theta = 0°$. When the polarization axes are in cross Nichol configuration, $\theta - 90°$.

[Mathematical formula 3]

$$DODP(\lambda,\theta) = \frac{T_s(\lambda,\theta)}{T_1(\lambda,0)\cdot T_2(\lambda,0)} \times 100 \qquad (\%)$$

(where, $T_s$ ($\lambda$, $\theta$) represents light transmittance when an optical film is inserted without any gap between a polarizer and an analyzer polarization axes of which are at an angle of $\theta$ and $T_1$ ($\lambda$, $\theta$) · $T_2$ ($\lambda$, 0) represents light transmittance when natural light is incident on two polarizers that are overlapped such that the polarization axes are at an angle of 0°) .

Further, regarding the optical film related to the invention, amount of transmitted light compared to linearly polarized light preferably has little dependency on the angle. Specifically, when the optical film is installed between a polarizer having the same polarization axis and a light analyzer and the film is rotated within the rage of 0 to 360° around the light axis, coefficient of variation of the amount of transmitted light is preferably 20% or less.

Further, regarding the optical film related to the invention, the degree of non-polarization (100-V) obtained from the Stokes parameter represented by the following mathematical formula 4 and mathematical formula 5 is preferably 10% or more, more preferably 15% or more, and still more preferably 20% or more.

[Mathematical formula 4]

$$100 - V = 100 - \frac{\sqrt{S_1^2 + S_2^2 + S_3^2}}{S_0} \times 100$$

(where, V represents degree of polarization)
[Mathematical formula 5]

$$S_0 = I_x + I_y$$

$$S_1 = I_x - I_y$$

$$S_2 = 2I_{45°} - (I_x + I_y) = I_{45°} - I_{135°}$$

$$S_3 = 2I_R - (I_x + I_y) = I_R - I_L$$

(where, $I_x$ represents strength of horizontal linearly polarized light component, $I_y$ represents strength of vertical linearly polarized light component, $I_{45°}$ represents strength of 45° linearly polarized light component, $I_{135°}$ represents strength of 135° linearly polarized light component, $I_R$ represents strength of clockwise circular polarized light component, $I_L$ represents strength of counter-clockwise circular polarized light component, So is the Stokes parameter which represents strength of incident light, $S_1$ is the Stokes parameter which represents the preponderance of a horizontal linearly polarized light component , $S_2$ is the Stokes parameter which represents the preponderance of 45° linearly polarized light component, and $S_3$ is the Stokes parameter which represents the preponderance of clockwise circular polarized light component).

The optical film related to the invention preferably has total light transmittance of 50% to 99% and haze of 1% to 99%.

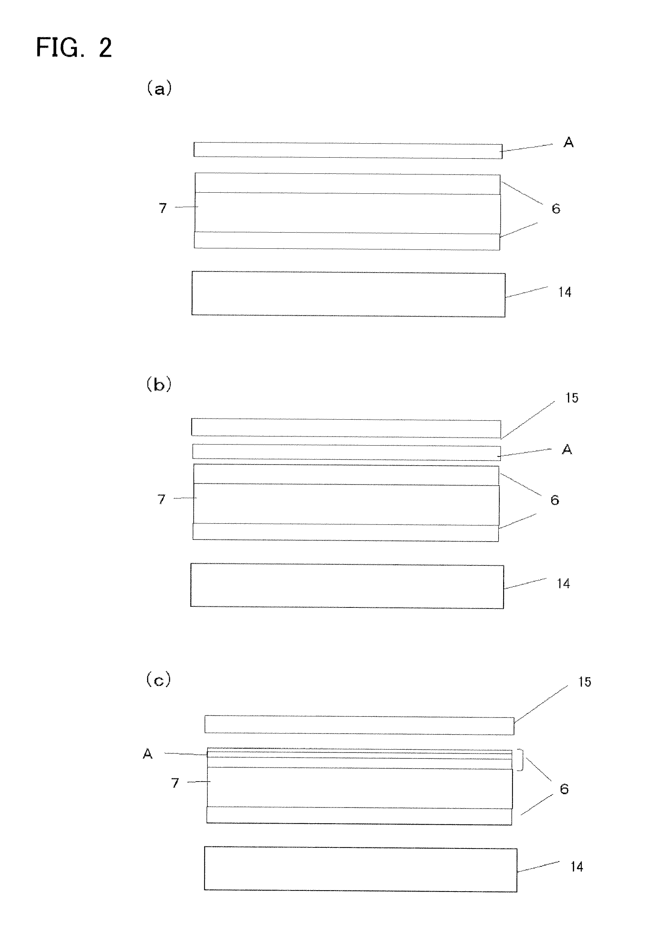

The optical film related to the invention may have a type illustrated in Fig. 2(a) in which the film itself is applied on top of a liquid crystal display, a type illustrated in Fig. 2 (b) in which the film is applied between a polarizer at display side and an anti-reflective layer, or a type illustrated in Fig. 2 (c) in which the film is applied between a polarizer layer (PVA or the like) and a protective layer (TAC or the like) within the polarizer at display side. According to one embodiment of the invention, the optical film related to the invention may exhibit an anti-reflection and/or anti-glare activity without requiring a post treatment of surface. Alternatively, as a protective layer, a transparent base may be adhered on outer surface of the optical film. The transparent base that is used is not specifically limited, if it is transparent. Examples thereof include a polycarbonate resin, a methacrylate resin, a PET resin, a polystyrene resin, a polyolefin resin including cyclic form, a triacetyl cellulose resin, and transparent glass. It is also preferable to perform an anti-reflection treatment, and/or an anti-glare treatment, and/or a hard coating treatment on outer surface of the transparent base. Method for adhering a polymer film on a transparent base is not particularly limited, and a method known in the field may be used.

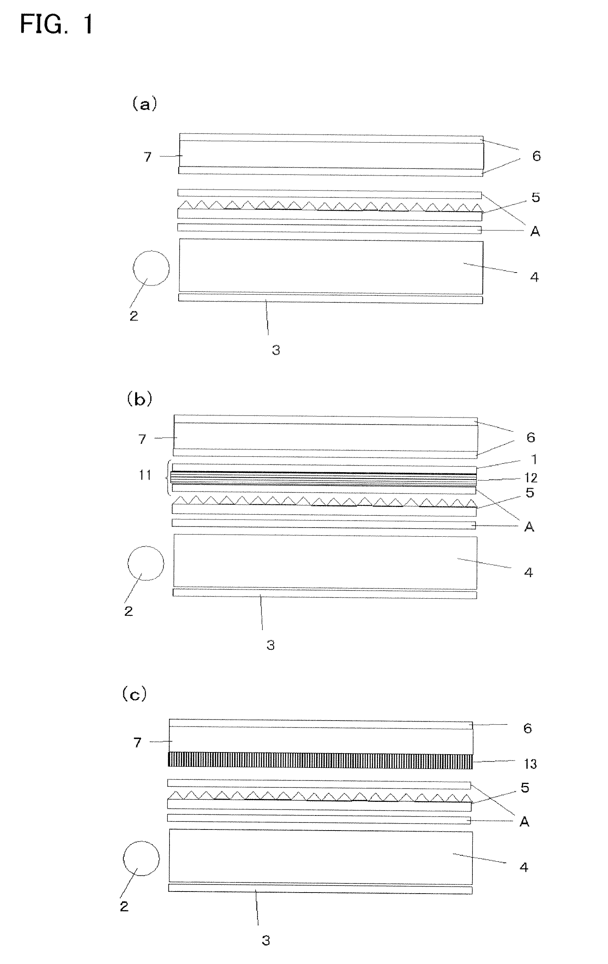

Further, the liquid crystal display device equipped with the optical film related to the invention may have a type illustrated in Fig. 1(a) in which polarization is eliminated and light-diffused by the optical film before and after a prism sheet, a type illustrated in Fig. 1(b) in which polarization is eliminated and light-diffused on bottom surface of the film for enhancing brightness, and a type illustrated in Fig. 1(c) in which polarization is eliminated and light-diffused on bottom surface of a wire grid type reflective polarizer. In any one of those cases, a light source device, a rear polarizer, a liquid crystal cell, and a front polarizer are included as a basic constitution. Further, although there may be various types depending on the construction of a liquid crystal cell, at least four constitutional elements including a light source device, a polarizer, a liquid crystal cell, and a polarizer are included in order. If necessary, other constitutional elements like an optical compensation plate or a color filter may be disposed between, before, or after those four constitutional elements. Further, those elements are not particularly limited, and any of those known in the field may be used. Further, since the polarizer is present at two sites according to the above constitution, to distinguish them in the specification, the one disposed between a light source device and a liquid crystal cell is referred to as a rear polarizer and the other disposed at further front of a liquid crystal cell is referred to as a front polarizer.

The optical film related to the invention may be placed at further front of the front polarizer. In addition, according to the liquid crystal display device, an optical compensation plate or a color filter is placed in front of a liquid crystal cell depending on specific mode. When a color filter is used, the optical film may be placed in front of the color filter. When an optical compensation plate is used, the optical film may be placed at the front side or back side of the optical compensation plate.

Further, the optical film related to the invention may be placed between a light source device and a rear polarizer. In the liquid crystal display device, a diffuser film or the like is placed behind a liquid crystal cell, depending on specific mode. When a diffuser film or the like is used, the optical film may be placed at the front side or back side of the diffuser film.

The optical film related to the invention has very little variation in wavelength or color tone of polarized light, and it can efficiently convert polarized light to non-polarized light that is close to natural light. Thus, by installing the optical film of the invention to a liquid crystal display device like a liquid crystal television or a liquid crystal display of a computer or a cellular phone, the linearly polarized light emitted from them can be converted to non-polarized light so that dark field can be eliminated without any discomfort even when polarized glasses are used. Further, even when it is used solely, light can be mildly diffused by it, so that eyestrain can be reduced. Further, by controlling the difference in refractive index between the particles and a resin binder or by applying roughness derived from the particles present on film surface, an anti-reflection activity for preventing residual images of a fluorescent lamp or the like can be given.

Further, the optical film related to the invention not only has a light diffusing effect but also can easily randomize polarization components reflected from a reflective polarizer, and therefore it can amplify with high efficiency the polarization components transmitted from the reflective polarizer. Thus, by using the optical film related to the invention for a liquid crystal display device or the like, polarization component which passes through a liquid crystal part can be increased, and therefore brightness can be enhanced.

Further, even for a case in which the light component emitted from a light source device contains polarization components due to the influence of a light source or a prism sheet, an influence caused by birefringence of a substrate in a diffuser sheet on non-uniformity of brightness can be reduced.

Examples

Herein below, the invention is described in more detail in view of Examples. However, it is evident that the invention is not limited to the Examples. Further, measurements of crystallinity, crystallite size, average particle diameter, specific surface, average pore diameter, porosity, porosity index, spherulite structure, and depolarization ability of polyamide microparticles, and depolarization degree, total light transmittance (T), haze (H), and transmitted light quantity of an optical film or the like were carried out as described below.

(Crystallinity of polyamide microparticles)

Crystallinity was measured by DSC (differential scanning calorimeter). Specifically it is calculated as a ratio between heat of fusion which is obtained from the area of a heat absorption peak under nitrogen stream with flow rate of 40 ml/min at the temperature range of 120 to 230°C with temperature increase rate of 10°C/min and a known value of heat of fusion of polyamide (that is, the mathematical formula 6 illustrated below). Further, heat of fusion of polyamide 6 was 45 cal/g as described by R. Vieweg, et. al., kunststoffe IV polyamide, page 218, Carl Hanger Verlag, 1966.
[Mathematical formula 6]

$$\chi = \Delta H_{obs} / \Delta H_m \times 100$$

(where, $\chi$ represents crystallinity (%), $\Delta H_{obs}$ represents heat of fusion of a sample (cal/g), and $\Delta H_m$ represents heat of fusion of polyamide (cal/g)).

(Crystallite size of polyamide microparticles)

By using rotating anode type X ray diffractometer RINT2500 manufactured by Rigaku Corporation, diffraction pattern was obtained from the scanning range of 15 to 40° under the conditions including using CuKα ray, tube voltage of 40 kV, tube current of 130 mA, scanning rate of 10°/min, and slit condition: DS (divergence slit)/SS (scatter slit)/RS (light receiving slit) = 0.5°/0.5°/0.15 mm. From a resulting diffraction pattern, the crystallite size D was calculated based on Scherrer equation, which is represented by the following mathematical formula 7, when Scherrer constant K is 1.
[Mathematical formula 7]

$$D = K \cdot \lambda / (\beta \cdot \cos\theta)$$

(where, $\lambda$ is a measurement wavelength, $\beta$ represents full width at half maximum, 8 represents position of diffraction peak, and K represents Scherrer constant, further, when more than one diffraction peak exist, crystallite size was calculated for each peak, and the average value was taken as the crystallite size).

(Average particle diameter of polyamide microparticles)

Average particle diameter and particle diameter distribution were measured as an average values of 100,000 microparticles by using a Coulter counter. The number average particle diameter (Dn) is expressed by the following mathematical formula 8, volume average particle diameter (Dv) is expressed by the following mathematical formula 9, and particle diameter distribution index (PDI) is expressed by the following mathematical formula 10.
[Mathematical formula 8]

$$Dn = \sum_{i=1}^{n} Xi / n$$

(where, Xi represents particle diameter of individual particle and n represents number of the measurements).

[Mathematical formula 9]

$$Dv = \sum_{i=1}^{n} Xi^4 \bigg/ \sum_{i=1}^{n} Xi^3$$

(where, Xi represents particle diameter of individual particle and n represents number of the measurements).

[Mathematical formula 10]

$$PDI = Dv \big/ Dn$$

(Specific surface area of polyamide microparticles)

For measurement of specific surface area, the BET three-point evaluation method using nitrogen absorption was performed.

(Average pore diameter and porosity of polyamide microparticles)

Average pore diameter was measured by a mercury porosimeter. Average pore diameter was obtained within the measurement range of from 0.0036 to 14 $\mu$m. Porosity P of the porous polyamide microparticles represents ratio between the volume of polyamide in one particle and void volume (as represented by the following the mathematical formula 11). Specifically, when expressed with the accumulated pore volume in a particle ($P_1$), it is represented by the following the mathematical formula 12.

[Mathematical formula 11]

$$P = Vp \big/ (Vp + Vs)$$

(where, $V_P$ represents void volume in particle and $V_S$ represents polymer volume in particle).

[Mathematical formula 12]

$$P = P_1 \big/ \left( P_1 + (1/\rho) \right) \times 100$$

(where, $P_1$ represents accumulated pore volume in particle and p represents density of a polyamide).

From a graph of the accumulated pore volume plotted against the pore diameters, accumulated pore volume in a particle is calculated and the porosity in a particle is calculated according to the following mathematical formula 13. For the calculation, p as density of polyamide microparticles was obtained from crystallinity $\chi$ obtained by DSC, crystal density pc, and non-crystal density ρa. The crystal density (ρc) and non-crystal density (ρa) of polyamide 6 were 1.23 $cm^3$/g and 1.09 $cm^3$/g, respectively.

[Mathematical formula 13]

$$\rho = \chi \cdot \rho c + (1 - \chi) \cdot \rho a$$

(Porosity index of polyamide microparticles)

The porosity index (i.e. roughness index, RI) of the polyamide microparticles can be represented as a ratio of BET specific surface area, that is, $S_p/S_{p0}$, in which Sp is a BET specific surface area of the porous microparticles and $S_{po}$ is a value of a specific surface area of spherical microparticles having smooth surface and the same particle diameter, and it is calculated according to the following mathematical formulas 14 and 15.

[Mathematical formula 14]

$$RI = Sp / Sp_0$$

[Mathematical formula 15]

$$Sp_0 = 6 / d / \rho$$

(where, d represents diameter of particle and ρ represents density of particle).

(Spherulite structure of polyamide microparticles)

Determination to see whether the particles have a spherulite structure in which particles have a sphere or semi-sphere shape, a spherulite structure with partially lacked structure (that is, C shape, curved bead shape), or a more lacked spherulite structure of an axialite type (that is, dumbbell shape) can be made by observing cross section of particles by a scanning or transmission type electron microscope and examining any radial growth of polyamide fibrils starting near the center nucleus. Determination was also made by confirming that the particles are in bright field even when they are observed under a polarization microscope equipped with a polarizer and a light analyzer in cross Nichol configuration.

(Depolarization ability of polyamide microparticles)

First, to 99.46 parts by weight of methyl methacrylate monomer, 0.34 parts by weight of 2,2'-azobis (isobutyronitrile) (AIBN) as a radical polymerization initiator and 0.20 parts by weight of 1-dodecane thiol(n-lauryl mercaptan) (n-LM) as a chain transfer agent were added followed by addition of 1.5 parts by weight of the polyamide microparticles. After stirring and heat polymerization, a plate-like resin sheet having thickness of about 0. 5 mm, in which the polyamide microparticles are evenly dispersed, was produced (herein below, it may be also referred to as a "polyamide microparticles dispersion sheet").

Next, an integrating sphere is installed at a detection part, two polarizing films are placed at the entrance such that polarization axes are vertical to each other (that is, cross Nichol configuration), and a resin sheet in which the polyamide microparticles are evenly dispersed was inserted between two polarizing films without any gap, and then the light transmittance $T_s$ ($\lambda$) in the wavelength ($\lambda$) range of from 400 to 750 nm was measured by using a UV/Vis spectrophotometer V-570 (manufactured by JASCO Corporation). As for the polarizing film, high contrast polarizer MLPH40 manufactured by MeCan Imaging, Inc. was used. Further, light transmittance Tp ($\lambda$) of a resin sheet which does not contain the polyamide microparticles was measured. Further, the light transmittance $T_1$ ($\lambda$) of the polarizing film used, the light transmittance $T_1$ ($\lambda$) · $T_2$ ($\lambda$) when two polarizing films are overlapped such that the polarization axes are parallel to each other, and the light transmittance $T_1$ ($\lambda$) · $T_3$ ($\lambda$) when two polarizing films are overlapped such that the polarization axes are vertical to each other were measured separately. Based on the following mathematical formula 20, the extinction ratio $\nu$ ($\lambda$) at wavelength $\lambda$ was calculated. Consequently, according to the following mathematical formula 1, depolarization coefficient Dpc ($\lambda$) at wavelength $\lambda$ was obtained. In the following examples, the depolarization coefficient is the coefficient at wavelength of 550 nm, unless specifically described otherwise.

[Mathematical formula 1]

$$Dpc(\lambda) = \frac{Dp(\lambda)}{\phi_p \cdot t} \qquad ( /m)$$

(where, $\phi_p$ represents volume fraction of polyamide microparticles in a resin sheet containing evenly dispersed polyamide microparticles and t represents thickness (m) of the resin sheet).

[Mathematical formula 2]

$$Dp(\lambda) = \frac{\nu(\lambda) \cdot T_s(\lambda) / (T_1(\lambda) \cdot T_2(\lambda) \cdot T_p(\lambda)) - 1}{\nu(\lambda) - 1}$$

(where, $\nu$ ($\lambda$) represents extinction ratio of a polarizing film, $T_1$ ($\lambda$) represents light transmittance of a polarizing film, $T_2$ ($\lambda$) represents maximum light transmittance when linearly polarized light is incident on a polarizing film, $T_p$ ($\lambda$) represents light transmittance of a resin sheet which does not contain polyamide microparticles, and $T_s$ ($\lambda$) represents light transmittance when a resin sheet containing evenly dispersed polyamide microparticles is inserted between two polarizing films in cross Nichol configuration).

[Mathematical formula 20]

$$\nu(\lambda) = \frac{T_2(\lambda)}{T_3(\lambda)}$$

(where, $T_2$ ($\lambda$) represents maximum light transmittance when linearly polarized light is incident on a polarizing film and $T_3$ ($\lambda$) represents minimum light transmittance when linearly polarized light is incident on a polarizing film).

(Degree of depolarization of an optical film)

An integrating sphere is installed at a detection part, two polarizing films are placed at the entrance such that polarization axes are at an angle of 8 (°), and a resin sheet in which the polyamide microparticles are evenly dispersed was inserted between two polarizing films without any gap, and then the light transmittance $T_s$ $(\lambda, \theta)$ in the wavelength $(\lambda)$ range of from 400 to 750 nm was measured by using a UV/Vis spectrophotometer V-570 (manufactured by JASCO Corporation). As for the polarizing film, high contrast polarizer MLPH40 manufactured by MeCan Imaging, Inc. was used. Further, the light transmittance $T_1$ $(\lambda, 0) \cdot T_2$ $(\lambda, 0)$ when two polarizing films are overlapped such that the polarization axes are parallel to each other, that is, $\theta = 0°$ was measured. And then, based on the following mathematical formula 3, degree of depolarization (DODP) was calculated. In the following examples, the degree of depolarization is the degree at wavelength of 550 nm, unless specifically described otherwise.

[Mathematical formula 3]

$$DODP(\lambda, \theta) = \frac{T_s(\lambda, \theta)}{T_1(\lambda, 0) \cdot T_2(\lambda, 0)} \times 100 \qquad (\%)$$

(where, $T_s$ $(\lambda, 0)$ represents light transmittance when an optical film is inserted without any gap between a polarizer and an analyzer polarization axes of which are at an angle of $\theta$ and $T_1$ $(\lambda, 0) \cdot T_2$ $(\lambda, 0)$ represents light transmittance when natural light is incident on two polarizers that are overlapped such that the polarization axes are at an angle of 0°).

(Coefficient of variation of degree of depolarization in accordance with wavelength)

Coefficient of variation CV $(\theta)$ of degree of polarization DODP $(\lambda, \theta)$ at wavelength $\lambda$ was measured from the standard deviation and mean value of the degree of depolarization within the wavelength range of from 400 to 750 nm.

(Angle dependency of transmitted light amount against linearly polarized light)

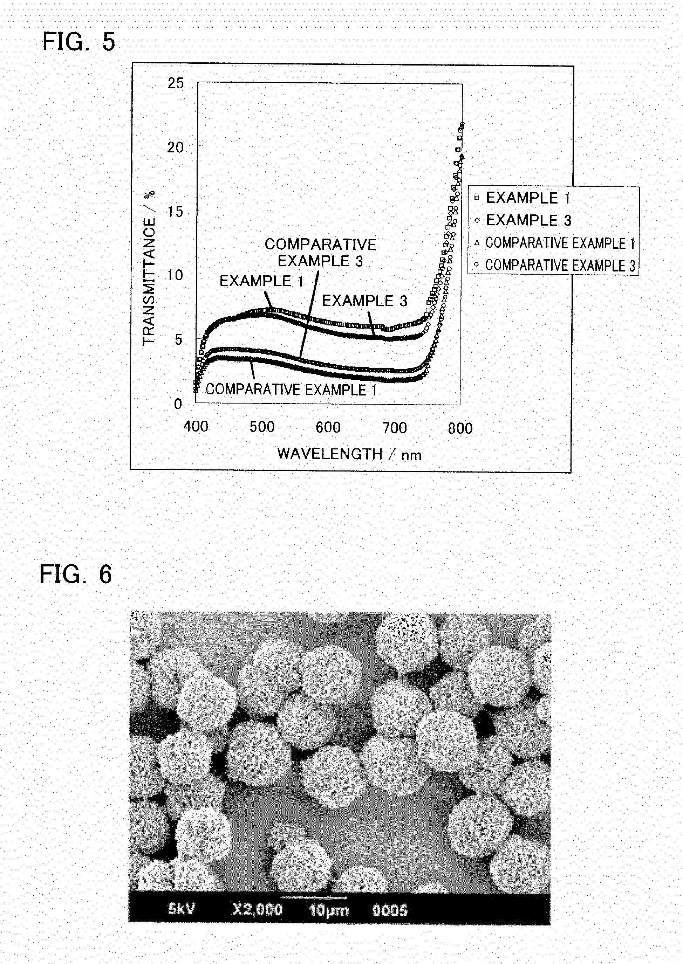

Fiber light source of a halogen lamp, a polarizer, a analyzer, a slit, and a detector were placed linearly along the central axis of a light source so as to align the polarization axis of the polarizer and the analyzer. Thereafter, an optical film to be measured was placed between the polarizer and the analyzer, and the strength of transmitted light was measured when the optical film is subjected to 5° pitch rotation from 0 to 360° around the optical center. Schematic diagram of the measurement device is illustrated in Fig. 5.

(Non-polarization degree of light transmitted from optical film)

Horizontally polarized light component was incident on an optical film and polarization state of the transmitted light was measured. For the measurement of polarization state, spectrophotometric stokes polarimeter Poxi-spectra (manufactured by TOKYO INSTRUMENTS, INC) was used and polarization state was measured at 550 nm.
Polarization state of light can be described with four Stokes parameter of $S_0$ to $S_3$. $S_0$ is the Stokes parameter which represents strength of incident light, $S_1$ is the Stokes parameter which represents the preponderance of a horizontal linearly polarized light component, $S_2$ is the Stokes parameter which represents the preponderance of 45° linearly polarized light component, and $S_3$ is the Stokes parameter which represents the preponderance of clockwise circular polarized light component, respectively, and they are represented by the following mathematical formula 5.
[Mathematical formula 5]

$$S_0 = I_x + I_y$$

$$S_1 = I_x - I_y$$

$$S_2 = 2I_{45°} - (I_x + I_y) = I_{45°} - I_{135°}$$

$$S_3 = 2I_R - (I_x + I_y) = I_R - I_L$$

(where, $I_x$ represents strength of horizontal linearly polarized light component, $I_y$ represents strength of vertical linearly polarized light component, $I_{45°}$ represents strength of 45° linearly polarized light component, $I_{135°}$ represents strength of 135° linearly polarized light component, $I_R$ represents strength of clockwise circular polarized light component, $I_L$ represents strength of counter-clockwise circular polarized light component, $S_0$ is the Stokes parameter which represents strength of incident light, $S_1$ is the Stokes parameter which represents the preponderance of a horizontal linearly polarized light component , $S_2$ is the Stokes parameter which represents the preponderance of 45° linearly polarized light component, and $S_3$ is the Stokes parameter which represents the preponderance of clockwise circular polarized light component).

Completely polarized state is represented by the following mathematical formula 16 and completely non-polarized state is represented by the following mathematical formula 17. Further, partially polarized state is represented by the following mathematical formula 18.

[Mathematical formula 16]

$$S_0^2 = S_1^2 + S_2^2 + S_3^2$$

[Mathematical formula 17]

$$S_1 = S_2 = S_3 = 0$$

[Mathematical formula 18]

$$S_0^2 \geq S_1^2 + S_2^2 + S_3^2$$

Further, ratio of the strength of completely polarized light compared to incident strength $S_0$ is defined as degree of polarization V, and it is represented by the following mathematical formula 19.

[Mathematical formula 19]

$$V = \frac{\sqrt{S_1^2 + S_2^2 + S_3^2}}{S_0} \times 100$$

When V is 100%, all the exit light can be described as a polarized component. When V value is lower than that, it indicates that random components which may not be described as a polarized component exists. When polarized components in random state are defined as non-polarization, the degree of non-polarization is expressed as (100 - V).

(Total light transmittance and haze of optical film)

Total light transmittance (T) and haze (H) were measured by using the haze meter NDH5000 (manufactured by NIPPON DENSHOKU INDUSTRIES CO., LTD.) with reference to JIS K7361-1 and JIS K7136.

(Brightness measurement)

Brightness was measured by using a luminance meter LS-110 manufactured by Konica Minolta and a back light unit of a commercially available 32-inch liquid crystal television. The back light unit consists of, from the bottom surface, a light source LED, a diffuser plate, two sheets of prism, and a reflective polarizer (DBEF), and constitution A corresponds to a case in which an optical film is placed between the prism sheet and a reflective polarizer and constitution B corresponds to a case in which an optical film is placed between the prism sheet and a diffuser film. For brightness measurement, an absorption type polarizer is further placed on the most bright top surface of a reflective polarizer (DBEF), and then the brightness was measured for the constitution A and constitution B, respectively.

(Example 1)

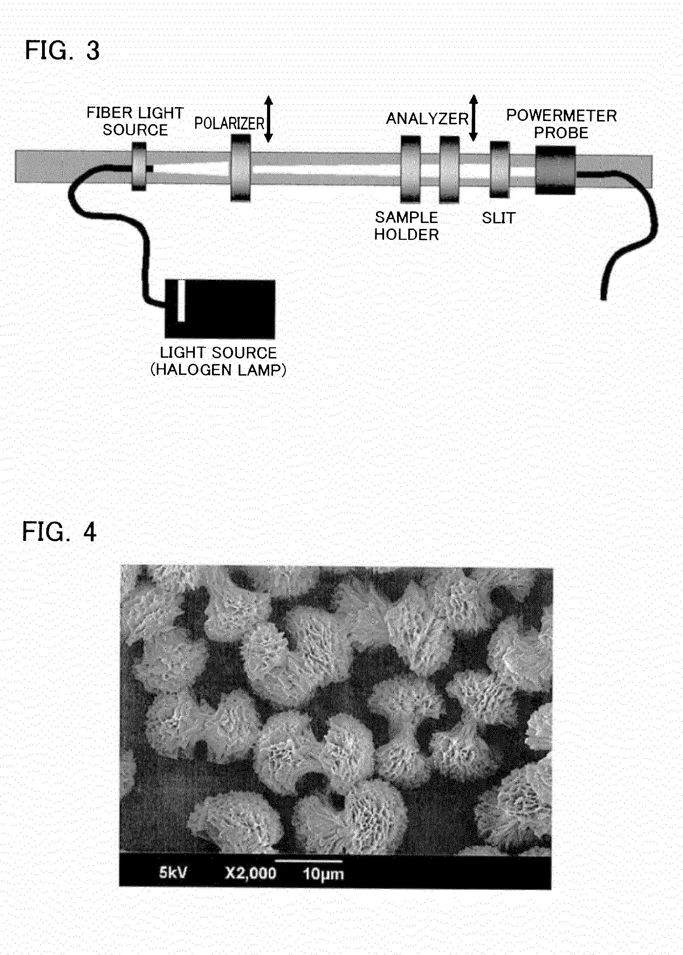

Polyamide 6 (manufactured by Ube Industries, Ltd., molecular weight: 13,000) was mixed with glycerin in a vessel so that the weight concentration of polyamide is 20% by weight. Temperature of the solution was increased while introducing nitrogen gas to the system. Since the polyamide started to melt at 180°C, it was taken as the phase separation temperature. The temperature was further increased and the mixture was dissolved by heating under stirring until the temperature reaches 200°C to give homogeneous solution. To the resulting solution, 80°C glycerin was added within a minute under stirring until the temperature becomes 140°C $\pm$ 1°C, which is 40°C lower than the phase separation temperature. After stirring again for 20 seconds and confirming that there is no concentration instability, it was kept in an oil bath at 140°C. As a result, about 15 seconds after keeping, the solution started to get clouded and precipitates of homogeneous polyamide 6 were obtained without having any lump-like deposits in the vessel. The precipitates obtained were washed with methanol, dried at room temperature, and observed under a scanning electron microscope (SEM). As a result, porous particles of axialite type (that is, dumbbell shape) as illustrated in Fig. 4 were observed. When observed under a polarization microscope, the particles showed a bright field even in a cross Nichol configuration, and therefore local presence of a spherulite structure was confirmed. With regard to the particles obtained, number average particle diameter was 11.5 $\mu$m, volume average particle diameter was 16.4 $\mu$m, and PDI was 1.4, indicating the particles with relatively even particle size. Further, the crystallinity was 51.9%, size of a crystallite was 13.9 nm, specific surface area was 8.4 m$^2$/g, and average pore diameter was 14.2 nm. Further, depolarization coefficient of the particles was 2.85/m and the degree of depolarization of a polyamide microparticle-dispersed sheet was 20.1%. Results of the light transmittance of the polyamide microparticle-dispersed sheet are illustrated in Fig. 5.

(Comparative Example 1)

To a solution containing phenol and methanol at weight ratio of 9 : 1, polyamide 6 (molecular weight: 13,000) was added and dissolved therein to prepare polyamide 6 solution in which polyamide 6 concentration is 5% by weight. To one part by weight of the resulting nylon solution, a mixture prepared by mixing in advance methanol and water in an amount of 7 parts by weight and 0.5 parts by weight, respectively, was added. The temperature was room temperature. After keeping it for 24 hours, the precipitation was terminated. After that, the polymer was isolated by centrifuge, and while adding 50°C methanol in an amount of 100 times the microparticles, dehydration by centrifuge was carried out. The particles were then washed and dried at room temperature. The polymer particles obtained were observed under a scanning electron microscope, and they were found to be relatively even and spherical porous particles having number average particle diameter of 10.0 $\mu$m and volume average particle diameter of 13.8 $\mu$m. SEM image of the particles obtained is illustrated in Fig. 6. The particles obtained have average pore diameter of 56.8 nm, crystallite size of 11.2 nm, PDI of 1.4, specific surface area of 21.4 m$^2$/g, porosity index RI of 42.1, and crystallinity of 56%. The depolarization coefficient of the particles was 1.11/m and the degree of depolarization of the polyamide microparticles-dispersed sheet was 8.6%. Results of the light transmittance of the polyamide microparticles-dispersed sheet are illustrated in Fig. 5.

(Example 2)

With respect to Example 1, a glycerin solution was prepared so that the polyamide weight concentration is 2% by weight. To the resulting solution, 80°C glycerin was added within a minute under stirring until the temperature becomes 130°C $\pm$ 1°C, which is 50°C lower than the phase separation temperature. After stirring again for 20 seconds and confirming that there is no concentration instability, it was kept in an oil bath at 130°C. As a result, about 25 seconds after keeping, the solution started to get clouded and precipitates of homogeneous polyamide 6 were obtained without having any lump-like deposits in the vessel. The precipitates obtained were washed with methanol, dried at room temperature, and observed under a SEM. As a result, porous particles with approximately spherical shape were observed. When the cross section was observed under a transmission electron microscope (TEM), the particles were shown to have a spherulite structure in which the fibrils grow radially starting near the center. With regard to the particles obtained, number average particle diameter was 15.1 $\mu$m and volume average particle diameter was 17.6 $\mu$m, indicating the particles with relatively even particle size. Further, the crystallinity was 58.6%, size of a crystallite was 12.4 nm, and specific surface area was 7.6 m$^2$/g. Further, depolarization coefficient of the particles was 2.81/m.

(Comparative Example 2)

With respect to Example 1, a glycerin solution was prepared so that the polyamide weight concentration is 5% by weight. After stopping the stirring, the solution obtained was cooled at the rate of 2.4°C/min. As a result, the solution started to be opaque at the temperature of 160°C, which is 20°C lower than the phase separation temperature. In accordance with further decrease in temperature, the solution became more opaque at the temperature which is 40°C lower than the phase separation temperature. The precipitates obtained were washed with methanol, dried at room temperature, and observed under a SEM. As a result, porous particles in which spherulite particles are aggregated were observed. The polyamide 6 particles obtained showed a big lump-like precipitates. Aggregates of the particles have the crystallinity of 58.2% and size of a crystallite of 10.3 nm. Further, depolarization coefficient of the particles was 1.35/m.

(Example 3)

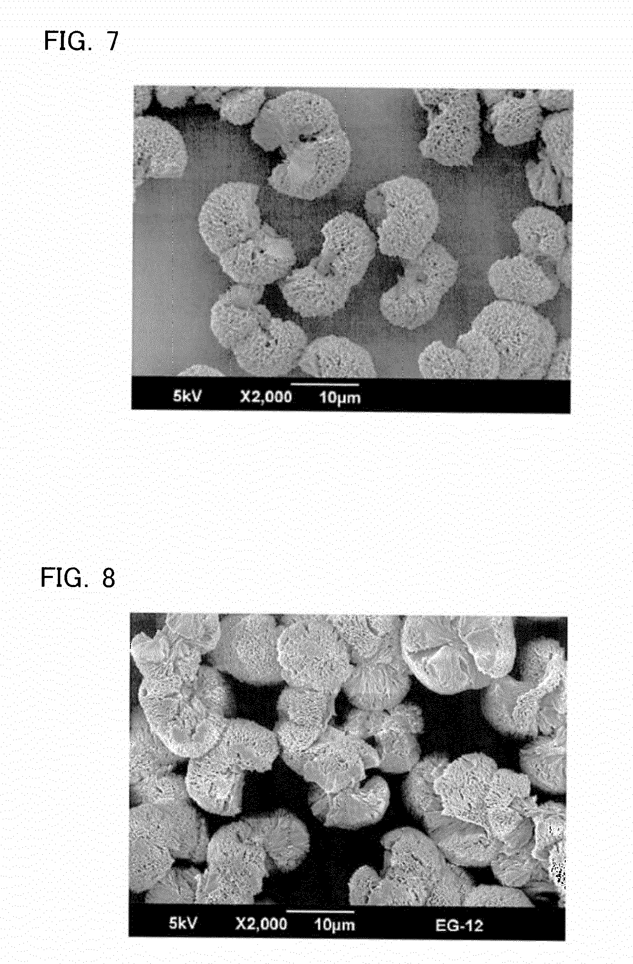

Polyamide 6 (manufactured by Ube Industries, Ltd., molecular weight: 13,000) was mixed with ethylene glycol in a vessel so that the weight concentration of polyamide is 10% by weight. Temperature of the solution was increased while introducing nitrogen gas to the system. Since the polyamide started to melt at 150°C, it was taken as the phase separation temperature. The temperature was further increased and the mixture was dissolved by heating under stirring until the temperature reaches 180°C to give homogeneous solution. To the resulting solution, 40°C ethylene glycol was added within a minute under stirring until the temperature becomes 110°C $\pm$ 1°C, which is 40°C lower than the phase separation temperature. After stirring again for 20 seconds and confirming that there is no concentration instability, it was kept in an oil bath at 110°C. As a result, about 50 seconds after keeping, the solution started to get clouded and precipitates of homogeneous polyamide 6 were obtained without having any lump-like deposits in the vessel. The precipitates obtained were washed several times with methanol, dried at room temperature, and observed under a scanning electron microscope and the particle diameter thereof was measured. The results are given in Fig. 7. As a result, porous particles with approximately curved bead shape (that is, C shape) having relatively even particle size, that is, number average particle diameter was 20.1 $\mu$m and volume average particle diameter was 23.5 $\mu$m, were observed. From the TEM image of the cross section, it was confirmed that the particles have a spherulite structure. With regard to the particles obtained, the crystallinity was 52.3%, size of a crystallite was 14.3 nm, specific surface area was 5.1 m$^2$/g, and average pore diameter was 55 nm. Further, depolarization coefficient of the particles was 2.59/m and the degree of depolarization of a polyamide microparticle-dispersed sheet was 18.9%. Results of the light transmittance of the polyamide microparticle-dispersed sheet are listed in Fig. 5.

(Comparative Example 3)

By having the ethylene glycol solution of the polyamide of Example 3 in a stainless vat, which has been incubated at 75°C, for 30 min as a liquid film with thickness of 1.5 mm, the precipitates of polyamide 6 were obtained. The precipitates obtained were washed several times with methanol, dried at room temperature, and observed under SEM. Particle size was also measured. With respect to the polyamide microparticles obtained, number average particle diameter was 9.8 $\mu$m, volume average particle diameter was 14.0 $\mu$m, average pore diameter was 19 nm, PDI was 1.43, specific surface area was 3.0 $m^2$/g, the crystallinity was 47.5%, and size of a crystallite was 12.6 nm. Further, depolarization coefficient of the particles was 1.01/m and the degree of depolarization of a polyamide microparticle-dispersed sheet was 7.7%. Results of the light transmittance of the polyamide microparticle-dispersed sheet are illustrated in Fig. 5.

(Example 4)

With respect to Example 3, an ethylene glycol solution was prepared so that the polyamide weight concentration is 2% by weight. To the resulting solution, 20°C ethylene glycol was added within a minute under stirring until the temperature becomes 100°C $\pm$ 1°C, which is 50°C lower than the phase separation temperature. After stirring again for 20 seconds and confirming that there is no concentration instability, it was kept in an oil bath at 100°C. As a result, about 80 seconds after keeping, it started to get clouded and precipitates of homogeneous polyamide 6 were obtained without having any lump-like deposits in the vessel. The precipitates obtained were washed with methanol, dried at room temperature, and observed under a scanning electron microscope. As a result, porous particles of axialite type (that is, dumbbell shape) were observed. When observed under a polarization microscope, Parts of the particles showed a bright field even in a cross Nichol configuration, and therefore a spherulite structure was confirmed. With regard to the particles obtained, number average particle diameter was 18.2 $\mu$m and volume average particle diameter was 21.6 $\mu$m, indicating the particles with relatively even particle size. Further, the specific surface area was 6.4 $m^2$/g, crystallinity was 56.6%, and size of a crystallite was 12.9 nm. Further, depolarization coefficient of the particles was 2.52/m.

(Comparative Example 4)

With respect to Example 3, an ethylene glycol solution was prepared so that the polyamide weight concentration is 10% by weight. After stopping the stirring, the solution obtained was cooled in air at the rate of 1.6°C/min. As a result, film-like precipitates were observed at solution surface near the temperature of 140°C. In accordance with further decrease in temperature, the entire solution started to get gellified near 120°C, and at the temperature of 115°C, the solution was completely solidified. The solids obtained were rather soft, thus easily disintegrated. The solids were disintegrated, washed with methanol, dried at room temperature, and the precipitates in powder state were observed under a SEM. As a result, a porous structure having curved beads that are looked like linked to each other was observed. Thus-obtained powder of polyamide 6 has poor feeling, and huge lump-like precipitates were also observed. The crystallinity was 52.0% and size of a crystallite was 10.8 nm. Further, depolarization coefficient of the particles was 1.12/m.

(Example 5)

With respect to Example 3, an ethylene glycol solution was prepared so that the polyamide weight concentration is 2% by weight. To the resulting solution, 30°C ethylene glycol was added within a minute under stirring until the temperature becomes 130°C $\pm$ 1°C, which is 20°C lower than the phase separation temperature. After stirring again for 20 seconds and confirming that there is no concentration instability, it was kept in an oil bath at 130°C. As a result, about 10000 seconds after keeping, it started to get clouded and lump-like deposits occurred simultaneously, yielding uneven precipitates of polyamide 6. The precipitates obtained were collected, washed with methanol, dried at room temperature, and observed under a SEM. As a result, porous and lump-like particles having spherulite structure that are looked like linked to each other were observed. Number average particle diameter was 25.3 $\mu$m, volume average particle diameter was 40.3 $\mu$m, and specific surface area was 6.4 $m^2$/g. Further, the crystallinity was 59.2% and size of a crystallite was 13.1 nm. Further, depolarization coefficient of the particles was 2.48/m.

(Example 6)

With respect to Example 3, an ethylene glycol solution was prepared so that the polyamide weight concentration is 3% by weight. To the resulting solution, 30°C ethylene glycol was added within a minute under stirring until the temperature becomes 80°C $\pm$ 1°C, which is 70°C lower than the phase separation temperature. As a result, the precipitates started to appear during stirring and the solution became opaque, and therefore the stirring was immediately stopped and the mixture was kept in an oil bath at 80°C. The precipitates obtained were washed with methanol, dried at room temperature, and observed under a SEM. As a result, slightly aggregated polyamide particles of axialite type were observed. Number average particle diameter was 18.6 $\mu$m, volume average particle diameter was 32.2 $\mu$m, and specific surface area was 4.9 $m^2$/g. Further, the crystallinity was 54.8% and size of a crystallite was 12.8 nm. Further, depolarization coefficient of the particles was 2.39/m.

(Example 7)

Polyamide 6 (manufactured by Ube Industries, Ltd., molecular weight: 13,000) was mixed with 1,3-butane diol in a vessel so that the weight concentration of polyamide is 1% by weight. Temperature of the solution was increased while introducing nitrogen gas to the system. Since the polyamide started to melt at 152°C, it was taken as the phase separation temperature. The temperature was further increased and the mixture was dissolved by heating under stirring until the temperature reaches 170°C to give homogeneous solution. To the resulting solution, 40°C 1, 3-butane diol was added within a minute under stirring until the temperature becomes 105°C $\pm$ 1°C, which is 47°C lower than the phase separation temperature. After stirring again for 20 seconds and confirming that there is no concentration instability, it was kept in an oil bath at 105°C. As a result, about 870 seconds after keeping, it started to get clouded and precipitates of homogeneous polyamide 6 were obtained without having any lump-like deposits in the vessel. The precipitates obtained were washed with methanol, dried at room temperature, and observed under a SEM. As a result, porous particles of axialite type (that is, dumbbell shape) were observed. When observed under a polarization microscope, the particles showed a bright field even in a cross Nichol configuration, and therefore local presence of a spherulite structure was confirmed. With regard to the particles obtained, number average particle diameter was 19.9 $\mu$m and volume average particle diameter was 22.6 $\mu$m, indicating the particles with relatively even particle size. Further, the crystallinity was 59.8%, size of a crystallite was 12.7 nm, and specific surface area was 8.9 $m^2$/g. Further, depolarization coefficient of the particles was 2.61/m.

(Example 8)

Polyamide 6 (manufactured by Ube Industries, Ltd., molecular weight: 13,000) was mixed with ethylene glycol in a vessel so that the weight concentration of polyamide is 20% by weight. Temperature of the solution was increased while introducing nitrogen gas to the system. Since the polyamide started to melt at 150°C, it was taken as the phase separation temperature. The temperature was further increased and the mixture was dissolved by heating under stirring until the temperature reaches 160°C to give homogeneous solution, which was kept for 6 hours at 160°C. To the resulting solution, 40°C ethylene glycol was added within a minute under stirring until the temperature becomes 100C $\pm$ 1°C, which is 50°C lower than the phase separation temperature. After stirring again for 20 seconds and confirming that there is no concentration instability, it was kept in an oil bath at 100°C. As a result, about 15 seconds after keeping, it started to get clouded and precipitates of homogeneous polyamide 6 were obtained without having any lump-like deposits in the vessel. The precipitates obtained were washed with methanol, dried at room temperature, and observed under a scanning electron microscope (SEM). As a result, porous particles having a curved bead shape (that is, C shape) were observed. The specific surface area was 13.2 $m^2$/g. The number average particle diameter was 14.4 $\mu$m, volume average particle diameter was 19.5 $\mu$m, and PDI was 1.35, indicating the particles with relatively even particle size. Further, the crystallinity was 57.9% and size of a crystallite was 13.9 nm. Further, depolarization coefficient of the particles was 2.97/m.

(Comparative Example 5)

To a solution containing phenol and methanol at weight ratio of 9 : 1, polyamide 6 (molecular weight: 11,000) was added and dissolved therein to prepare polyamide 6 solution in which polyamide 6 concentration is 20% by weight. To one part by weight of the resulting nylon solution, a mixture prepared by mixing in advance methanol and water in an amount of 6 parts by weight and 1.5 parts by weight, respectively, was added. The temperature was room temperature. After keeping it for 24 hours, the precipitation was terminated. After that, the polymer was isolated by centrifuge, and while adding 50°C methanol in an amount of 100 times the microparticles, dehydration by centrifuge was carried out. The particles were then washed and dried at room temperature. The polymer particles obtained were observed under a scanning electron microscope, and they were found to be relatively even and spherical porous particles having number average particle diameter of 15.6 $\mu$m and volume average particle diameter of 23.2 $\mu$m. The specific surface area was 7.1 $m^2$/g. Further, the size of a crystallite was 11.5 nm, PDI was 1.5, and crystallinity was 49%. Further, depolarization coefficient of the particles was 1.32/m.

(Example 9)

The particles obtained from Comparative Example 5 were subjected to drying under reduced pressure at 100 Torr or less for four hours at 180°C. The particles obtained were observed under a scanning electron microscope, and they were found to be relatively even and spherical porous particles having number average particle diameter of 15. 0 $\mu$m and volume average particle diameter of 24.1 $\mu$m. The specific surface area was 5.2 $m^2$/g. Further, the size of a crystallite was 12.5 nm, PDI was 1.6, and crystallinity was 53%. Further, depolarization coefficient of the particles was 2.31/m.

(Example 10)

Polyamide 6 (manufactured by Ube Industries, Ltd., molecular weight: 13, 000) was mixed with ethylene glycol in a vessel so that the weight concentration of polyamide is 20% by weight. Temperature of the solution was increased while introducing nitrogen gas to the system. Since the polyamide started to melt at 150°C, it was taken as the phase separation temperature. The temperature was further increased and the mixture was dissolved by heating under stirring until the temperature reaches 160°C to give homogeneous solution, which was kept for 6 hours at 160°C. To the resulting solution, 40°C ethylene glycol was added within a minute under stirring until the temperature becomes 100°C $\pm$ 1°C, which is 50°C lower than the phase separation temperature. After stirring again for 20 seconds and confirming that there is no concentration instability, it was kept in an oil bath at 100°C. As a result, about 15 seconds after keeping, it started to get clouded and precipitates of homogeneous polyamide 6 were obtained without having any lump-like deposits in the vessel. The precipitates obtained were washed with methanol, dried at room temperature, and observed under a scanning electron microscope (SEM). As a result, porous particles having a curved bead shape (that is, C shape) illustrated in Fig. 8 were observed. The number average particle diameter was 14.4 $\mu$m, volume average particle diameter was 19.5 $\mu$m, and PDI was 1.35, indicating the particles with relatively even particle size. Further, the crystallinity of the particles obtained was measured by DSC measurement, and as a result, the crystallinity was 57.9% and size of a crystallite was 13.9 nm. Further, depolarization coefficient of the particles was 2.97/m. The degree of depolarization of a polyamide microparticle-dispersed sheet was 24.4%. Coefficient of variation CV ($\theta$) of the degree of depolarization within the wavelength range of 400 to 750 nm was 11.9%.

(Comparative Example 6)

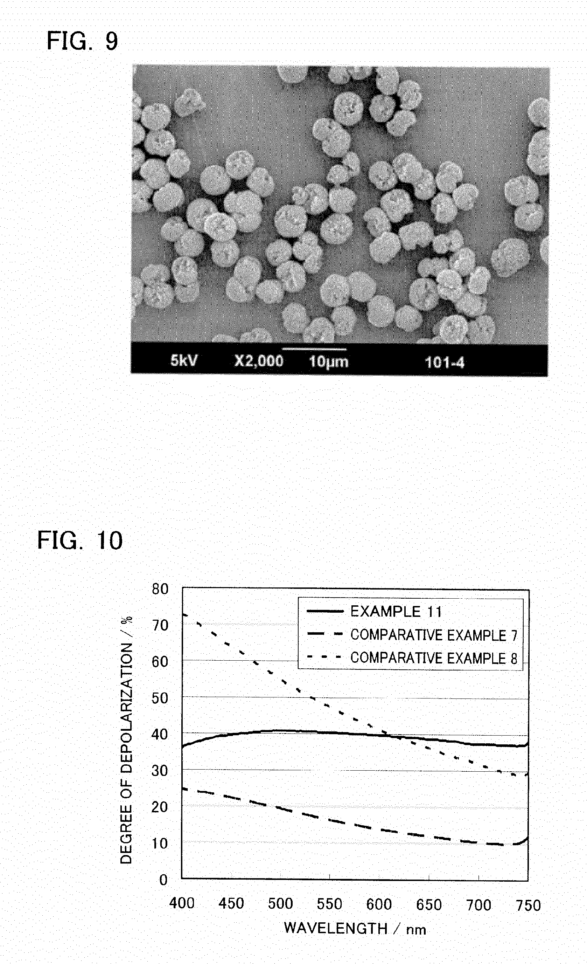

To a solution containing phenol and 2-propanol (IPA) at weight ratio of 9 : 1, polyamide 6 (manufactured by Ube Industries, Ltd., molecular weight: 11,000) was added and dissolved therein to prepare polyamide 6 solution in which polyamide 6 concentration is 20% by weight. To one part by weight of the resulting polyamide solution, a mixture prepared by mixing in advance IPA and water in an amount of 3 parts by weight and 2. 6 parts by weight, respectively, was added. The temperature was 20°C. After keeping it for 24 hours, the precipitation was terminated. After that, the polymer was isolated by centrifuge, and while adding 50°C IPA in an amount of 100 times the microparticles, dehydration by centrifuge was carried out. The particles were then washed. The polymer particles obtained were observed under a scanning electron microscope, and they were found to be relatively even and spherical porous particles having number average particle diameter of 5.50 $\mu$m and volume average particle diameter of 6.49 $\mu$m. Further, the average pore diameter was 0.05681 $\mu$m, PDI was 1.18, specific surface area was 21. 4 $m^2$/g, and porosity index RI was 42.1. Further, the crystallinity of the polymer particles was 51.7% and size of a crystallite was 11.3 nm. As illustrated in Fig. 9, the single particle of the porous particles was illustrated to have a spherulite structure by itself, in which the nylon fibrils grow radially and three dimensionally starting from a single nucleus or multiple nuclei at the center. Further, depolarization coefficient of the particles was 0.53/m. The degree of depolarization of a polyamide microparticle-dispersed sheet was 4.51%. Coefficient of variation CV ($\theta$) of the degree of depolarization within the wavelength range of 400 to 750 nm was 38.0%.

(Example 11)

To 20 parts by weight of the particles prepared in Example 10, 50 parts by weight of urethane acrylate based oligomer (UV-7600B, manufactured by The Nippon Synthetic Chemical Industry Co., Ltd.), 0.8 parts by weight of 1-hydroxy-cyclohexyl phenyl ketone (manufactured by Wako Pure Chemical Industries, Ltd.) as a photopolymerization initiator, and 50 parts by weight of toluene were evenly dispersed to give a slurry. The resulting slurry was coated on a triacetyl cellulose (TAC) substrate using a bar coater. With UV illumination (850 mJ/$cm^2$), curing and drying treatment was carried out to manufacture an optical film having a resin layer containing the polyamide microparticles on a TAC substrate. Coefficient of variation CV ($\theta$) of the degree of depolarization within the wavelength range of 400 to 750 nm was 5.3%. The wavelength dependency of the degree of depolarization of the optical film is illustrated in Fig. 10.

(Comparative Example 7)

By using the particles prepared in Comparative Example 6, the optical film was manufactured in the similar manner as Example 11. Coefficient of variation CV ($\theta$) of the degree of depolarization within the wavelength range of 400 to 750 nm was 29.2%. The wavelength dependency of the degree of depolarization of the optical film is illustrated in Fig. 10.

(Comparative Example 8)

For the 1/4 wavelength retardation plate (1/4 wavelength retardation plate MCR140U, manufactured by MeCan Imaging, Inc.), coefficient of variation CV (θ) of the degree of depolarization within the wavelength range of 400 to 750 nm was 28.1%. The wavelength dependency of the degree of depolarization of 1/4 wavelength retardation plate is illustrated in Fig. 10.

(Example 12)

It was confirmed that, when a polarizing film is placed on a liquid crystal display and the angle θ between the polarization axis of a liquid crystal display and light axis of a polarizing film was congruent (θ = 0°), a bright field was obtained, and by tilting 90 degrees (θ = 90°) to the right or to the left from the light axis of bright field, completely dark field was obtained. Next, the optical film obtained from Example 11 was adhered on a screen of a liquid crystal display and observed under a fluorescent lamp. As a result, an anti-reflection function with reduced reflected glare of a fluorescent lamp was confirmed. Further, on the optical film produced in Example 11, a polarizing film was placed at various angles compared to the polarization axis of a liquid crystal display, and as a result, a clear image was seen on the liquid crystal display even under a state in which the polarizing film is tilted 90 degrees to the right or to the left from the light axis of bright field, indicating that the dark field is eliminated and there is almost no change in color tone of a display image is observed. Accordingly, it was clearly illustrated that, by using the optical film of the invention, linearly polarized light can be converted with high efficiency to non-polarized light.

(Comparative Example 9)

A similar process as Example 12 was performed except that a 1/4 wavelength retardation plate (1/4 wavelength retardation plate MCR140U, manufactured by MeCan Imaging, Inc.) is used. As a result, a reflected glare of the fluorescent lamp was observed, indicating that there is no anti-reflection function. Further, when the polarization axis of a liquid crystal display and polarization axis of a polarizing film are congruent (θ = 0°), image on the liquid crystal display obtained via the 1/4 wavelength retardation plate appeared to be yellowish, and when the polarization axis of a liquid crystal display and polarization axis of a polarizing film are perpendicular to each other (θ = 90°), the image appeared to be bluish, indicating the change in color tone.

(Comparative Example 10)

A similar process as Example 12 was performed except that a polyethylene terephthalate (PET) film is used. As a result, reflected glare of the fluorescent lamp was observed, indicating that there is no anti-reflection function. Further, regardless of the angle θ between the polarization axis of a liquid crystal display and light axis of a polarizing film, image on the liquid crystal display can be obtained. However, color non-uniformity with rainbow color due to retardation, that is caused by birefringence on an entire film, was generated, and therefore the screen image was extremely difficult to see.

(Example 13)

The optical film was produced in the similar manner as Example 11 except that a polyethylene terephthalate (PET) substrate is used instead of a triacetyl cellulose (TAC) substrate. After that, a similar process as Example 12 was performed. As a result, it was confirmed that the optical film of the invention has an anti-reflection function with reduced reflected glare of the fluorescent lamp. Further, even when the polarizing film is tilted 90 degrees to the right or to the left compared to the light axis of light field, an image on a liquid crystal display can be clearly seen, and therefore it was confirmed that not only the dark field is eliminated but also color non-uniformity with rainbow color, that is caused by birefringence of PET, is eliminated, thus the color tone change of an image was almost eliminated.

(Example 14)

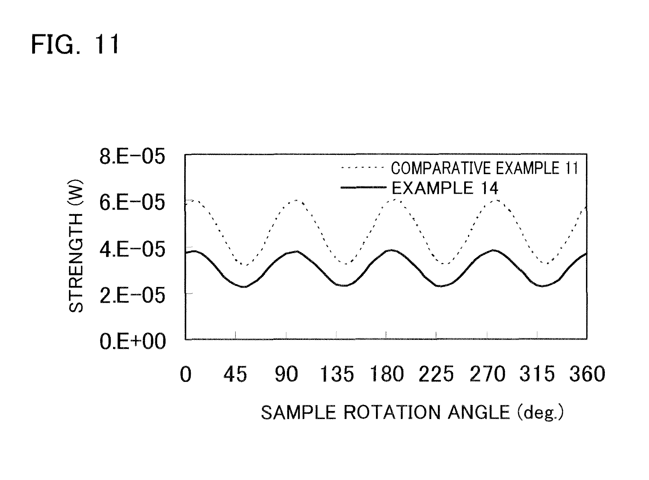

To 20 parts by weight of the particles prepared in Example 10, 50 parts by weight of urethane acrylate based oligomer (UV-7600B, manufactured by The Nippon Synthetic Chemical Industry Co., Ltd.), 0.8 parts by weight of 1-hydroxy-cyclohexyl phenyl ketone (manufactured by Wako Pure Chemical Industries, Ltd.) as a photopolymerization initiator, and 50 parts by weight of toluene were evenly dispersed to give a slurry. The resulting slurry was coated on a polyethylene terephthalate substrate (50 μm) using a bar coater. With UV illumination (850 mJ/cm$^2$), the curing and drying treatment was carried out to manufacture an optical film having a resin layer containing the polyamide microparticles on a PET substrate. Coefficient of variation CV ($\theta$) of the degree of depolarization within the wavelength range of 400 to 750 nm was 5.3%. The optical film has haze of 46.8% and total light transmittance of 90.0%. Angle dependency of transmitted light of the optical film is illustrated in Fig. 11. When the optical film is rotated around the light axis within the range of 0 to 360°, coefficient of variation of transmitted light amount of linearly polarized light was 17.8%. The degree of non-polarization (100-V), which is obtained from stokes parameter, was 21.7%.

(Comparative Example 11)

The polyethylene terephthalate substrate (50 $\mu$m) used in Example 14 has haze of 0.4% and total light transmittance of 92.8%. Angle dependency of transmitted light of the optical film is illustrated in Fig. 11. When the optical film is rotated around the light axis within the range of 0 to 360°, coefficient of variation of transmitted light amount of linearly polarized light was 21.6%. The degree of non-polarization (100-V), which is obtained from stokes parameter, was 0.7%.

(Example 15)

An optical film was manufactured in the similar manner as Example 14 except that thickness of the polyethylene terephthalate substrate is changed to 100 $\mu$m. Within the wavelength range of 400 to 750 nm, coefficient of variation CV ($\theta$) of the degree of depolarization DODP ($\lambda$, $\theta$) was 5.4 (%) at maximum. The film has haze of 48.1% and total light transmittance of 88.2%. When the optical film is rotated around the light axis within the range of 0 to 360°, coefficient of variation of transmitted light amount of linearly polarized light was 19.2%. The degree of non-polarization (100-V), which is obtained from stokes parameter, was 25.3%.

(Comparative Example 12)

The polyethylene terephthalate substrate (100 $\mu$m) used in Example 15 has haze of 2.4% and total light transmittance of 90.0%. When the polyethylene terephthalate substrate is rotated around the light axis within the range of 0 to 360°, coefficient of variation of transmitted light amount of linearly polarized light was 23.7%. The degree of non-polarization (100-V), which is obtained from stokes parameter, was 0.4%.

(Example 16)

To 20 parts by weight of the particles prepared in Example 10, 50 parts by weight of urethane acrylate based oligomer (UV-7600B, manufactured by The Nippon Synthetic Chemical Industry Co., Ltd.), 0.8 parts by weight of 1-hydroxy-cyclohexyl phenyl ketone (manufactured by Wako Pure Chemical Industries, Ltd.) as a photopolymerization initiator, and 50 parts by weight of toluene were evenly dispersed to give a slurry. The resulting slurry was coated on a triacetyl cellulose (TAC) substrate (80 $\mu$m) using a bar coater. With UV illumination (850 mJ/cm$^2$), the curing and drying treatment was carried out to manufacture an optical film having a resin layer containing the polyamide microparticles on a TAC substrate. Coefficient of variation (CV) $\theta$ of the degree of depolarization within the wavelength range of 400 to 750 nm was 5.2%. The optical film has haze of 55%. The optical film was added to a back light unit and brightness was measured. As a result, the brightness was found to be 1349 (cd/m$^2$) for configuration A and 1422 (cd/m$^2$) for configuration B.

(Comparative Example 13)

A commercially available diffuser film (haze: 55%) was added to a back light unit and brightness was measured. As a result, the brightness was found to be 1301 (cd/m$^2$) for configuration A and 1388 (cd/m$^2$) for configuration B.

Reference Signs List

1    Light diffuser film
2    Light source
3    Reflecting plate
4    Light guide plate
5    Prism sheet
6    Polarizing film
7    Liquid crystal element part

11    Brightness enhancement film
12    Reflective polarizer layer (DBEF layer)
13    Reflective polarizer layer (wire grid type)
14    Back light module
15    Anti-reflective layer (AG or AR)
A     Optical film of the invention

**Claims**

1.  Polyamide microparticles comprising a spherocrystal structure and exhibiting a crystallite size of 12 nm or more, as measured by wide-angle X ray diffraction, and a crystallinity of 50% or more, as measured by DSC.

2.  The polyamide microparticles according to Claim 1, wherein number average particle diameter of the corresponding sphere is 1 to 50 $\mu$m.

3.  The polyamide microparticles according to Claim 1 or 2, wherein specific surface area is 0.1 to 80 m$^2$/g and the microparticles have a porous structure.

4.  The polyamide microparticles according to any one of Claims 1 to 3, wherein the polyamide is polyamide 6.

5.  The polyamide microparticles according to any one of Claims 1 to 4, wherein depolarization coefficient Dpc ($\lambda$) for the light with wavelength of 550 nm is 1.5/m or more, in which the depolarization coefficient is defined by the following mathematical formula 1 and mathematical formula 2:

[Mathematical formula 1]

$$Dpc(\lambda) = \frac{Dp(\lambda)}{\phi_p \cdot t} \qquad ( \; /m)$$

(where, $\phi$p represents volume fraction of polyamide microparticles in a resin sheet containing evenly dispersed polyamide microparticles and t represents thickness (m) of the resin sheet).

[Mathematical formula 2]

$$Dp(\lambda) = \frac{v(\lambda) \cdot T_s(\lambda)/(T_1(\lambda) \cdot T_2(\lambda) \cdot T_p(\lambda)) - 1}{v(\lambda) - 1}$$

(where, $v$ ($\lambda$) represents extinction ratio of a polarizing film, $T_1$ ($\lambda$) represents light transmittance of a polarizing film, $T_2$ ($\lambda$) represents maximum light transmittance when linearly polarized light is incident on a polarizing film, Tp ($\lambda$) represents light transmittance of a resin sheet which does not contain polyamide microparticles, and $T_s$ ($\lambda$) represents light transmittance when a resin sheet containing evenly dispersed polyamide microparticles is inserted between two polarizing films in cross Nichol configuration).

6.  An optical film comprising a resin layer having the polyamide microparticles described in any one of Claims 1 to 5.

7.  The optical film according to Claim 6, wherein coefficient of variation CV ($\theta$) of the degree of depolarization DODP ($\lambda$, $\theta$) within the wavelength range of 400 to 750 nm is 25% or less when $\theta$ = 0° to 90°, in which the variation coefficient is represented by the following mathematical formula 3:

[Mathematical formula 3]

$$DODP(\lambda,\theta) = \frac{T_s(\lambda,\theta)}{T_1(\lambda,0) \cdot T_2(\lambda,0)} \times 100 \qquad (\%)$$

(where, $T_s(\lambda, \theta)$ represents light transmittance when an optical film is inserted without any gap between a polarizer and an analyzer polarization axes of which are at an angle of 8 and $T_1(\lambda, 0)$ T2 $(\lambda, 0)$ represents light transmittance when natural light is incident on two polarizers that are overlapped such that the polarization axes are at an angle of 0°).

8.  The optical film according to Claim 6 or 7, wherein non-polarization degree (100-V) obtained from the Stokes parameter represented by the following mathematical formula 4 and mathematical formula 5 is 10% or more:

[Mathematical formula 4]

$$100 - V = 100 - \frac{\sqrt{S_1^2 + S_2^2 + S_3^2}}{S_0} \times 100$$

(where, V represents degree of polarization)

[Mathematical formula 5]

$$S_0 = I_x + I_y$$

$$S_1 = I_x - I_y$$

$$S_2 = 2I_{45°} - (I_x + I_y) = I_{45°} - I_{135°}$$

$$S_3 = 2I_R - (I_x + I_y) = I_R - I_L$$

(where, $I_x$ represents strength of horizontal linearly polarized light component, $I_y$ represents strength of vertical linearly polarized light component, $I_{45°}$ represents strength of 45° linearly polarized light component, $I_{135°}$ represents strength of 135° linearly polarized light component, $I_R$ represents strength of clockwise circular polarized light component, $I_L$ represents strength of counter-clockwise circular polarized light component, So is the Stokes parameter which represents strength of incident light, $S_1$ is the Stokes parameter which represents the preponderance of a horizontal linearly polarized light component , $S_2$ is the Stokes parameter which represents the preponderance of 45° linearly polarized light component, and $S_3$ is the Stokes parameter which represents the preponderance of clockwise circular polarized light component).

9.   A liquid crystal display device, comprising a light-source device, a rear polarizer, liquid crystal cells, and a front polarizer, which has the optical film described in any one of Claims 6 to 8 between the light-source device and either the front surface of the front polarizer or the rear surface of the rear polarizer.

10. A method of manufacturing polyamide microparticles comprising mixing the polyamide (A) and the solvent (B), which acts as a good solvent for the polyamide (A) at high temperatures but as a non-solvent at low temperatures, heating the mixture to give a homogeneous polyamide solution, mixing the polyamide solution with the solvent (C) at low temperatures under stirring for 3 min or less until the temperature is 20 to 80°C lower than the phase separation temperature of the polyamide solution, and keeping the mixture at the same temperature to precipitate the polyamide.

11. The method of manufacturing polyamide microparticles according to Claim 10, wherein the solvent (B) is polyhydric alcohol.

12. The method of manufacturing polyamide microparticles according to Claim 10 or 11, wherein the polyamide (A) is polyamide 6.

# FIG. 1

(a)

(b)

(c)

## FIG. 2

(a)

(b)

(c)

# FIG. 3

FIBER LIGHT SOURCE
POLARIZER
ANALYZER
POWERMETER PROBE
SAMPLE HOLDER
SLIT
LIGHT SOURCE (HALOGEN LAMP)

# FIG. 4

5kV  X2,000  10µm

FIG. 5

FIG. 6

FIG. 7

FIG. 8

## FIG. 9

5kV    X2,000    10μm    101-4

## FIG. 10

# FIG. 11

| | | International application No. |
|---|---|---|
| **INTERNATIONAL SEARCH REPORT** | | PCT/JP2011/059645 |

**A. CLASSIFICATION OF SUBJECT MATTER**
*C08J3/14*(2006.01)i, *G02B5/30*(2006.01)i, *G02F1/1335*(2006.01)i

According to International Patent Classification (IPC) or to both national classification and IPC

**B. FIELDS SEARCHED**

Minimum documentation searched (classification system followed by classification symbols)
C08J3/14, G02B5/30, G02F1/1335

Documentation searched other than minimum documentation to the extent that such documents are included in the fields searched
Jitsuyo Shinan Koho        1922-1996   Jitsuyo Shinan Toroku Koho   1996-2011
Kokai Jitsuyo Shinan Koho  1971-2011   Toroku Jitsuyo Shinan Koho   1994-2011

Electronic data base consulted during the international search (name of data base and, where practicable, search terms used)
JSTPlus/(JDreamII)

**C. DOCUMENTS CONSIDERED TO BE RELEVANT**

| Category* | Citation of document, with indication, where appropriate, of the relevant passages | Relevant to claim No. |
|---|---|---|
| A | WO 2007/119592 A1   (Ube Industries, Ltd.),<br>25 October 2007 (25.10.2007),<br>the entire description<br>& EP 2009471 A1          & US 2009/0310067 A1 | 1-12 |
| A | JP 2010-53272 A  (Ube Industries, Ltd.),<br>11 March 2010 (11.03.2010),<br>the entire specification<br>(Family: none) | 1-12 |
| A | JP 2008-303304 A  (MetalColor Co., Ltd.),<br>18 December 2008 (18.12.2008),<br>the entire specification<br>(Family: none) | 1-12 |

☒ Further documents are listed in the continuation of Box C.     ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 24 May, 2011 (24.05.11) | 31 May, 2011 (31.05.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2011/059645 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 8-12765 A  (Korea Institute of Science & Technology),<br>16 January 1996 (16.01.1996),<br>the entire specification<br>& KR 10-0127095 B1 | 1-12 |
| A | Ryo SAKIMOTO, "Creation of Polymer Nano-Particles from Solution Crystallization", Japanese Journal of Polymer Science and Technology, 2009.12, vol.66, no.12, pages 591 to 597 | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003185821 A
- JP 10010522 A
- JP 2010091655 A
- WO 2007119592 A
- JP 2007204767 A
- JP 8012765 A
- US 2639278 A

- JP 2006328173 A
- JP 6308496 A
- JP 2004004699 A
- JP 2000221507 A
- JP 2001188126 A
- JP 4184429 A

**Non-patent literature cited in the description**

- **R. VIEWEG.** kunststoffe IV polyamide. Carl Hanger Verlag, 1966, 218